(19) **Europäisches Patentamt European Patent Office Office européen des brevets**

(11) **EP 4 691 640 A1**

(12) **EUROPEAN PATENT APPLICATION**
published in accordance with Art. 153(4) EPC

(43) Date of publication:
**11.02.2026 Bulletin 2026/07**

(21) Application number: **24780195.4**

(22) Date of filing: **25.03.2024**

(51) International Patent Classification (IPC):
**B01J 35/57** (2024.01)   **B01D 53/94** (2006.01)
**B01J 23/63** (2006.01)   **F01N 3/035** (2006.01)

(52) Cooperative Patent Classification (CPC):
**B01D 53/94; B01J 23/63; B01J 35/57; F01N 3/035**

(86) International application number:
**PCT/JP2024/011727**

(87) International publication number:
**WO 2024/204078 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 JP 2023056090**

(71) Applicant: **Mitsui Kinzoku Company, Limited Tokyo (JP)**

(72) Inventors:
• **AKITA Shingo**
  **Ageo-shi, Saitama 362-0025 (JP)**
• **MYOCHI Rikiya**
  **Ageo-shi, Saitama 362-0025 (JP)**
• **KURIHARA Hiroki**
  **Ageo-shi, Saitama 362-0025 (JP)**

(74) Representative: **Novagraaf Technologies Bâtiment O2 2, rue Sarah Bernhardt CS90017 92665 Asnières-sur-Seine Cedex (FR)**

(54) **EXHAUST GAS PURIFICATION CATALYST**

(57) An object of the present invention is to provide an exhaust gas purification catalyst capable of achieving both improvement of PM collection performance and suppression of pressure loss increase, and the present invention provides an exhaust gas purification catalyst (1) including: a wall-flow substrate; and at least one of a first catalyst layer (20) and a second catalyst layer (30), wherein the exhaust gas purification catalyst (1) satisfies the following formulae 1a and 2a:

$$1.30 \times 10^{-3} \le Ra \quad \dots (1a)$$

$$Xa \times Ya \le 8.00 \quad \dots (2a)$$

and/or satisfies the following formulae 1b and 2b:

$$1.30 \times 10^{-3} \le Rb \quad \dots (1b)$$

$$Xb \times Yb \le 8.00 \quad \dots (2b).$$

Fig.6

EP 4 691 640 A1

## Description

### Field Of Invention

The present invention relates to an exhaust gas purification catalyst.

### Background Art

Exhaust gas emitted from an internal combustion engine of an automobile, a motorcycle, and the like contains harmful components such as hydrocarbons (HC), carbon monoxide (CO), and nitrogen oxides (NOx). A three-way catalyst is used to purify and detoxify those harmful components. A catalyst containing noble metal elements, such as Pt, Pd, and Rh, is used as the three-way catalyst.

In addition to harmful components such as HC, CO, and NOx, the exhaust gas contains particulate matter (PM), which is known to cause air pollution.

To respond to an environmental regulation on PM, a vehicle equipped with a gasoline engine such as a gasoline direct injection engine (GDI) is also required to be installed with a filter with a PM collection function (GPF: Gasoline Particulate Filter), similarly to a vehicle equipped with a diesel engine.

For example, a substrate having a structure known as a wall-flow type is used as a GPF. The wall-flow substrate includes: an inflow-side cell having an open end on the exhaust gas inflow side and a closed end on the exhaust gas outflow side; an outflow-side cell having a closed end on the exhaust gas inflow side and an open end on the exhaust gas outflow side; and a porous partition wall separating the inflow-side cell and the outflow-side cell. In the wall-flow substrate, when the exhaust gas that has flowed into the wall-flow substrate from the end (opening) on the exhaust gas inflow side of the inflow-side cell passes through the porous partition wall and flows out from the end (opening) on the exhaust gas outflow side of the outflow-side cell, PM in the exhaust gas is trapped in pores of the catalyst layer and the partition wall.

Since space for installing an exhaust gas purification catalyst is usually limited, technologies for collecting PM and purifying harmful components such as HC, CO, and NOx by forming a catalyst layer containing a noble metal element such as Pt, Pd or Rh on a wall-flow type substrate have been studied (e.g., Patent Documents 1 to 3).

### Citation List

Patent Documents

Patent Document 1: Japanese Patent Laid-Open No. 2017-217646
Patent Document 2: Japanese Patent Laid-Open No. 2008-272664
Patent Document 3: International Publication No. WO 2008/136232

### Summary of Invention

Technical Problem

As the pore sizes in the catalyst layer and the partition wall decrease, PM collection performance improves, but pressure loss increases. Conversely, as the pore sizes in the catalyst layer and the partition wall increase, pressure loss is suppressed, but PM collection performance declines. Therefore, it is challenging to achieve both improvement of PM collection performance and suppression of pressure loss increase. Accordingly, there is a need for technologies capable of achieving both.

Accordingly, an object of the present invention is to provide an exhaust gas purification catalyst capable of achieving both improvement of PM collection performance and suppression of pressure loss increase.

Solution to Problem

In order to solve the above-described problem, the present invention provides the following exhaust gas purification catalysts.

[1] An exhaust gas purification catalyst including: a substrate extending in an exhaust gas flow direction; and at least one of a first catalyst layer and a second catalyst layer,
wherein the substrate includes:

an inflow-side cell extending in the exhaust gas flow direction and having an open end on an exhaust gas inflow side thereof and a closed end on an exhaust gas outflow side thereof;

an outflow-side cell extending in the exhaust gas flow direction and having a closed end on an exhaust gas inflow side thereof and an open end on an exhaust gas outflow side thereof; and

a porous partition wall separating the inflow-side cell and the outflow-side cell from each other,

wherein the first catalyst layer is formed on an inflow-side cell side of the partition wall from an end on an exhaust gas inflow side of the partition wall along the exhaust gas flow direction,

wherein the second catalyst layer is formed on an outflow-side cell side of the partition wall from an end on an exhaust gas outflow side of the partition wall along a direction opposite to the exhaust gas flow direction, and

wherein the exhaust gas purification catalyst satisfies the following formulae 1a and 2a:

$$1.30 \times 10^{-3} \leq Ra \qquad \ldots (1a)$$

$$Xa \times Ya \leq 8.00 \qquad \ldots (2a)$$

wherein Ra represents a gas permeability ($cm^3/(cm^2 \cdot s\text{-}Pa)$) of the first catalyst layer and the partition wall as determined using a permporometer, Xa represents a 50% flow pore diameter ($\mu m$) of the first catalyst layer and the partition wall as determined by a bubble point method using a permporometer, and Ya represents a 10% flow pore diameter ($\mu m$) of the first catalyst layer and the partition wall as determined by a bubble point method using a permporometer,

and/or satisfies the following formulae 1b and 2b:

$$1.30 \times 10^{-3} \leq Rb \qquad \ldots (1b)$$

$$Xb \times Yb \leq 8.00 \qquad \ldots (2b)$$

wherein Rb represents a gas permeability ($cm^3/(cm^2 \cdot s \cdot Pa)$) of the second catalyst layer and the partition wall as determined using a permporometer, Xb represents a 50% flow pore diameter ($\mu m$) of the second catalyst layer and the partition wall as determined by a bubble point method using a permporometer, and Yb represents a 10% flow pore diameter ($\mu m$) of the second catalyst layer and the partition wall as determined by a bubble point method using a permporometer.

[2] The exhaust gas purification catalyst according to [1], wherein the exhaust gas purification catalyst satisfies the following formula 3a:

$$2.00 \leq Xa \times Ya \qquad \ldots (3a)$$

and/or satisfies the following formula 3b:

$$2.00 \leq Xb \times Yb \qquad \ldots (3b).$$

[3] The exhaust gas purification catalyst according to [1] or [2], wherein the exhaust gas purification catalyst satisfies the following formula 4a:

$$0.60 \leq Xa \qquad \ldots (4a)$$

and/or satisfies the following formula 4b:

$$0.60 \leq Xb \qquad \ldots (4b).$$

[4] The exhaust gas purification catalyst according to any one of [1] to [3], wherein the exhaust gas purification catalyst satisfies the following formula 5a:

$$Ya \leq 5.00 \qquad ... (5a)$$

and/or satisfies the following formula 5b:

$$Yb \leq 5.00 \qquad ... (5b).$$

[5] The exhaust gas purification catalyst according to any one of [1] to [4], wherein the first catalyst layer and the second catalyst layer each contain a rod-shaped material and a non-rod-shaped material.

[6] The exhaust gas purification catalyst according to [5], wherein at least one of the rod-shaped material and the non-rod-shaped material contains one or more selected from a Ce-based oxide and a Ce-Zr-based complex oxide.

[7] The exhaust gas purification catalyst according to [5] or [6], wherein a content of the rod-shaped material in the first catalyst layer is 4 % by mass or more and 35 % by mass or less, based on a mass of the first catalyst layer, and wherein a content of the rod-shaped material in the second catalyst layer is 4 % by mass or more and 35 % by mass or less, based on a mass of the second catalyst layer.

[8] The exhaust gas purification catalyst according to any one of [5] to [7], wherein a content of the non-rod-shaped material in the first catalyst layer is 50 % by mass or more and 95 % by mass or less, based on a mass of the first catalyst layer, and wherein a content of the non-rod-shaped material in the second catalyst layer is 50 % by mass or more and 95 % by mass or less, based on a mass of the second catalyst layer.

Advantageous Effects of Invention

According to the present invention, there is provided an exhaust gas purification catalyst capable of achieving both improvement of PM collection performance and suppression of pressure loss increase.

**Brief Description of Drawings**

Figure 1 is a partial cross sectional view showing a state in which an exhaust gas purification catalyst according to an embodiment of the present invention is disposed in an exhaust gas path of an internal combustion engine.

Figure 2 is an end view taken along line A-A in Figure 1.

Figure 3 is an end view taken along line B-B in Figure 1.

Figure 4 is an enlarged view of a region denoted by the reference sign R1 in Figure 2.

Figure 5 is an enlarged view of a region denoted by the reference sign R2 in Figure 3.

Figure 6 is an end view taken along line C-C of Figure 1.

Figure 7A is a plan view of a cut piece cut out from an exhaust gas purification catalyst (a plan view when planarly viewed from an exhaust gas inflow side (the upper side of Figure 7B)).

Figure 7B is a cross sectional view taken along D1-D1 line in Figure 7A.

Figure 8A is a plan view of a cut piece used for determination of the gas permeability of a first catalyst layer and a partition wall (a plan view when planarly viewed from the exhaust gas inflow side (the upper side of Figure 8C), i.e., a plan view corresponding to Figure 7A).

Figure 8B is a plan view of a cut piece used for determination of the gas permeability of a first catalyst layer and a partition wall (a plan view when planarly viewed from the exhaust gas outflow side (the lower side of Figure 8C)).

Figure 8C is a cross sectional view taken along D2-D2 line in Figure 8A (a cross sectional view corresponding to Figure 7B).

Figure 9A is a plan view of a cut piece cut out from an exhaust gas purification catalyst (a plan view when planarly viewed from the exhaust gas inflow side (the upper side of Figure 9B)).

Figure 9B is a cross sectional view taken along D3-D3 line in Figure 9A.

Figure 10A is a plan view of a cut piece used for determination of the gas permeability of a second catalyst layer and a partition wall (a plan view when planarly viewed from the exhaust gas inflow side (the upper side of Figure 10C), i.e., a plan view corresponding to Figure 9A).

Figure 10B is a plan view of a cut piece used for determination of the gas permeability of a second catalyst layer and a partition wall (a plan view when planarly viewed from the exhaust gas outflow side (the lower side of Figure 10C)).

Figure 10C is a cross sectional view taken along D4-D4 line in Figure 10A (a cross sectional view corresponding to Figure 9B).

Figure 11 is a plan view of a cut piece used for determination of the gas permeability of a first catalyst layer and a partition wall (a plan view when planarly viewed from the exhaust gas inflow side (the upper side of Figure 8C), i.e., a plan view identical to Figure 8A). For some components (members, portions, etc.) in Figure 11, reference signs are omitted. The meaning of components (members, portions, etc.) in Figure 11 can be understood with reference to Figures 8A to 8C.

Figure 12 is a plan view of a cut piece used for determination of the gas permeability of a second catalyst layer and a partition wall (a plan view when planarly viewed from the exhaust gas outflow side (the lower side of Figure 10C), i.e., a plan view identical to Figure 10B). For some components (members, portions, etc.) in Figure 12, reference signs are omitted. The meaning of components (members, portions, etc.) in Figure 12 can be understood with reference to Figures 10A to 10C.

**Detailed Description of Invention**

<< Exhaust gas purification catalyst >>

Hereinafter, embodiments of the exhaust gas purification catalyst according to the present invention will be described with reference to the drawings.

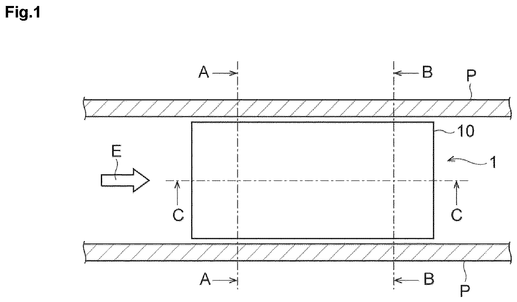

As shown in Figure 1, the exhaust gas purification catalyst 1 (hereinafter referred to as "catalyst 1") according to an embodiment of the present invention is disposed in an exhaust gas path within an exhaust pipe P of an internal combustion engine. Examples of the internal combustion engine include a gasoline engine (e.g., a GDI engine), a diesel engine, and the like.

In Figure 1, the exhaust gas flow direction of the exhaust path of the internal combustion engine is denoted by the reference sign E. The same applies to other figures. In the present specification, the upstream position in the exhaust gas flow direction E (e.g., the left side in Figure 1) may be referred to as "exhaust gas inflow side", "inflow side", or "upstream side", and the downstream position in the exhaust gas flow direction E (e.g., the right side in Figure 1) may be referred to as "exhaust gas outflow side", "outflow side", or "downstream side".

As shown in Figure 1, the catalyst 1 is disposed in the exhaust gas path of the internal combustion engine such that the axial direction of the substrate 10 to be described later coincides or roughly coincides with the exhaust gas flow direction E. In the present specification, the term "length" refers to the dimension in the axial direction of the substrate 10, unless otherwise defined.

As shown in Figures 1 to 6, the catalyst 1 includes a substrate 10, a first catalyst layer 20, and a second catalyst layer 30.

One of the first catalyst layer 20 and the second catalyst layer 30 may be omitted. That is, the catalyst 1 only needs to include at least one of the first catalyst layer 20 and the second catalyst layer 30. The present invention encompasses an embodiment wherein the catalyst 1 includes the first catalyst layer 20 and does not include the second catalyst layer 30, an embodiment wherein the catalyst 1 includes the second catalyst layer 30 and does not include the first catalyst layer 20, and an embodiment wherein the catalyst 1 includes both the first catalyst layer 20 and the second catalyst layer 30.

The catalyst 1 satisfies the following formulae 1a and 2a:

$$1.30 \times 10^{-3} \leq Ra \qquad \text{... (1a)}$$

$$Xa \times Ya \leq 8.00 \qquad \text{... (2a)}$$

and/or satisfies the following formulae 1b and 2b:

$$1.30 \times 10^{-3} \leq Rb \qquad \text{... (1b)}$$

$$Xb \times Yb \leq 8.00 \qquad \text{... (2b).}$$

The present invention encompasses an embodiment wherein the catalyst 1 satisfies the formulae 1a, 2a, 1b, and 2b, an embodiment wherein the catalyst 1 satisfies the formulae 1a and 2a and does not satisfy at least one of the formulae 1b and 2b, and an embodiment wherein the catalyst 1 satisfies the formulae 1b and 2b and does not satisfy at least one of the formulae 1a and 2a.

Specifically, the present invention encompasses the following embodiments.

[A] an embodiment wherein the catalyst 1 includes the first catalyst layer 20 satisfying the formulae 1a and 2a and the second catalyst layer 30 satisfying the formulae 1b and 2b.

[B] an embodiment wherein the catalyst 1 includes the first catalyst layer 20 satisfying the formulae 1a and 2a and the second catalyst layer 30 not satisfying at least one of the formulae 1b and 2b.

[C] an embodiment wherein the catalyst 1 includes the first catalyst layer 20 not satisfying at least one of the formulae 1a and 2a and the second catalyst layer 30 satisfying the formulae 1b and 2b.

[D] an embodiment wherein the catalyst 1 includes the first catalyst layer 20 satisfying the formulae 1a and 2a and does not include the second catalyst layer 30 (in this embodiment, the catalyst 1 does not include the second catalyst layer 30 and therefore satisfies neither the formula 1b nor 2b).

[E] an embodiment wherein the catalyst 1 includes the second catalyst layer 30 satisfying the formulae 1b and 2b and does not include the first catalyst layer 20 (in this embodiment, the catalyst 1 does not include the first catalyst layer 20 and therefore satisfies neither the formula 1a nor 2a).

For example, the catalyst 1 may be configured to include the first catalyst layer 20 satisfying the formulae 1a and 2a on the inflow-side cell 13a side (which will be described later) and the second catalyst layer 30 not satisfying at least one of the formulae 1b and 2b on the outflow-side cell 13b side (which will be described later). Alternatively, the catalyst 1 may be configured to include the first catalyst layer 20 not satisfying at least one of the formulae 1a and 2a on the inflow-side cell 13a side and the second catalyst layer 30 satisfying the formulae 1b and 2b on the outflow-side cell 13b side. Alternatively, the catalyst 1 may be configured to include the first catalyst layer 20 satisfying the formulae 1a and 2a and the second catalyst layer 30 satisfying the formulae 1b and 2b.

< Substrate >

The material constituting the substrate 10 can be appropriately selected from known materials. Examples of the material constituting the substrate 10 include a ceramic material, a metal material, and the like. The ceramic material is preferred. Examples of the ceramic material include carbide ceramics such as silicon carbide, titanium carbide, tantalum carbide and tungsten carbide, nitride ceramics such as aluminum nitride, silicon nitride, boron nitride and titanium nitride, oxide ceramics such as alumina, zirconia, cordierite, mullite, zircon, aluminum titanate and magnesium titanate, and the like. Examples of the metal material include alloys such as stainless steel, and the like.

The length $L_{10}$ of the substrate 10 can be appropriately adjusted in consideration of exhaust gas purification performance, PM collection performance, and the like. From the viewpoint of improving exhaust gas purification performance and PM collection performance, the length $L_{10}$ of the substrate 10 is preferably 50 mm or more and 160 mm or less, and more preferably 80 mm or more and 130 mm or less.

The volume of the substrate 10 can be appropriately adjusted in consideration of exhaust gas purification performance, PM collection performance, and the like. From the viewpoint of improving exhaust gas purification performance and PM collection performance, the volume of the substrate 10 is preferably 0.5 L or more and 2.5 L or less, more preferably 0.5 L or more and 2.0 L or less, and still more preferably 0.7 L or more and 1.8 L or less. In the present specification, the volume of the substrate 10 refers to the apparent volume of the substrate 10. In the case where the substrate 10 is cylindrical, the outer diameter of the substrate 10 is expressed as "2r", and the length of the substrate 10 is expressed as "$L_{10}$", the volume of the substrate 10 is determined based on the formula: (Volume of substrate 10) = $\pi \times r^2 \times L_{10}$.

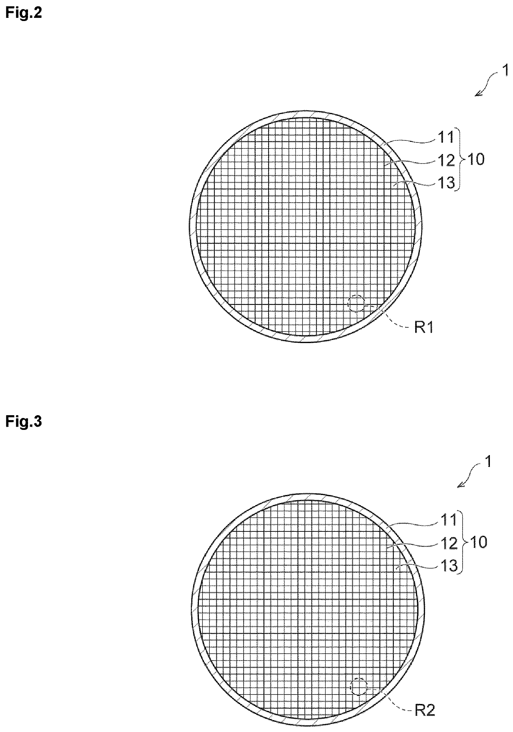

The substrate 10 is a wall-flow substrate. As shown in Figures 2 to 6, the substrate 10 includes cells 13 (inflow-side cells 13a and outflow-side cells 13b), and a porous partition wall 12 that separates the cells 13 (inflow-side cells 13a and outflow-side cells 13b) from each other. The substrate 10 preferably has a honeycomb structure.

As shown in Figures 2 and 3, the substrate 10 includes a tubular member 11. The cells 13 (inflow-side cells 13a and outflow-side cells 13b) and the partition wall 12 are provided inside the tubular member 11. The tubular member 11 defines the outer shape of the substrate 10. The axial direction of the tubular member 11 coincides with the axial direction of the substrate 10. As shown in Figures 2 and 3, the tubular member 11 has, for example, a hollow cylindrical shape, but may alternatively have other shapes such as a hollow elliptic cylindrical shape or a polygonal tubular shape.

As shown in Figures 2 to 6, each of the cells 13 (inflow-side cells 13a and outflow-side cells 13b) extends in the exhaust gas flow direction E and has an end on the exhaust gas inflow side and an end on the exhaust gas outflow side.

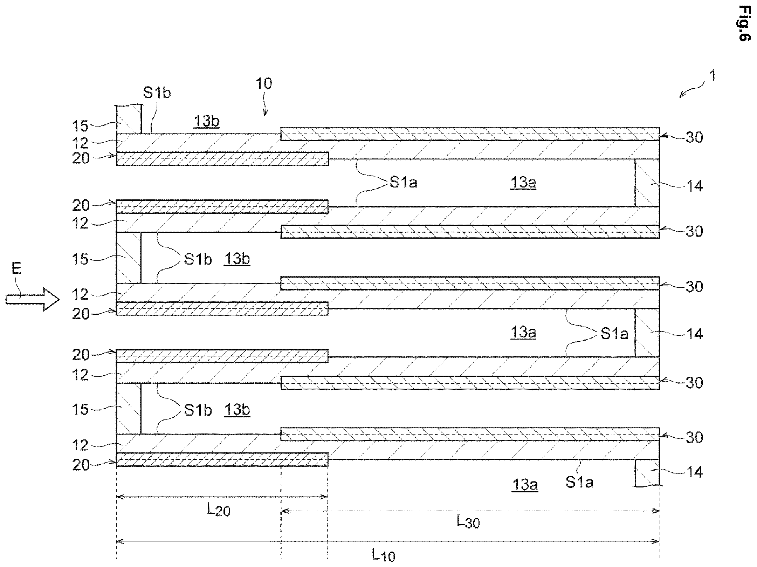

As shown in Figure 6, the substrate 10 is provided with a first sealing member 14 that seals the ends on the exhaust gas outflow side of some of the cells 13, and a second sealing member 15 that seals the ends on the exhaust gas inflow side of the remaining cells 13. Some of the cells 13 are each inflow-side cells 13a, in which the end on the exhaust gas inflow side is open and the end on the exhaust gas outflow side is closed by the first sealing member 14. The remaining cells 13 are each outflow-side cells 13b, in which the end on the exhaust gas inflow side is closed by the second sealing member 15 and the end on the exhaust gas outflow side is open.

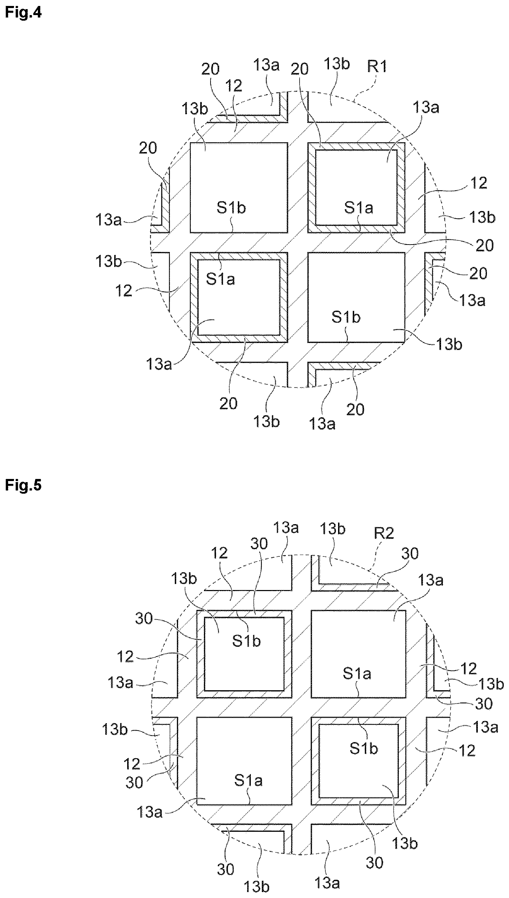

As shown in Figures 4 and 5, the inflow-side cells 13a and the outflow-side cells 13b are arranged alternately in both the vertical direction and the horizontal direction.

As shown in Figures 2 to 6, the partition wall 12 is present between adjacent cells 13 (adjacent inflow-side cell 13a and outflow-side cell 13b), whereby the adjacent cells 13 (adjacent inflow-side cell 13a and outflow-side cell 13b) are separated from each other by the partition wall 12.

As shown in Figures 4 to 6, a plurality of outflow-side cells 13b (four in the present embodiment) are arranged around a single inflow-side cell 13a. The inflow-side cell 13a and the outflow-side cells 13b arranged around the inflow-side cell 13a are separated from each other by the partition wall 12. As shown in Figures 4 to 6, a plurality of inflow-side cells 13a (four in the present embodiment) are arranged around a single outflow-side cell 13b. The outflow-side cell 13b and the inflow-side cells 13a arranged around the outflow-side cell 13b are separated from each other by the partition wall 12.

As shown in Figures 2 to 6, the plan view shapes of the ends (openings) on the exhaust gas inflow side of the inflow-side cells 13a and the plan view shapes of the ends (openings) on the exhaust gas outflow side of the outflow-side cells 13b are, for example, quadrangular (preferably square or rectangular, and more preferably square).

The plan view shapes of the ends (openings) on the exhaust gas inflow side of the inflow-side cells 13a preferably have the same area or almost the same area. The plan view shapes of the ends (openings) on the exhaust gas outflow side of the outflow-side cells 13b preferably have the same area or almost the same area. The plan view shapes of the ends (openings) on the exhaust gas inflow side of the inflow-side cells 13a preferably have the same area or almost the same area as the plan view shapes of the ends (openings) on the exhaust gas outflow side of the outflow-side cells 13b.

In the case where the plan view shapes of the ends (openings) on the exhaust gas inflow side of the inflow-side cells 13a are each quadrangular (preferably square or rectangular, more preferably square), the dimensions of the left edges (the edges on the left side in Figures 4 and 5) of the inflow-side cells 13a are preferably the same or almost the same; the dimensions of the right edges (the edges on the right side in Figures 4 and 5) of the inflow-side cells 13a are preferably the same or almost the same; the dimensions of the top edges (the edges on the upper side in Figures 4 and 5) of the inflow-side cells 13a are preferably the same or almost the same; and the dimensions of the bottom edges (the edges on the lower side in Figures 4 and 5) of the inflow-side cells 13a are preferably the same or almost the same.

In the case where the plan view shapes of the ends (openings) on the exhaust gas outflow side of the outflow-side cells 13b are each quadrangular (preferably square or rectangular, more preferably square), the dimensions of the left edges (the edges on the left side in Figures 4 and 5) of the outflow-side cells 13b are preferably the same or almost the same; the dimensions of the right edges (the edges on the right side in Figures 4 and 5) of the outflow-side cells 13b are preferably the same or almost the same; the dimensions of the top edges (the edges on the upper side in Figures 4 and 5) of the outflow-side cells 13b are preferably the same or almost the same; and the dimensions of the bottom edges (the edges on the lower side in Figures 4 and 5) of the outflow-side cells 13b are preferably the same or almost the same.

In the case where the plan view shapes of the ends (openings) on the exhaust gas inflow side of the inflow-side cells 13a and the plan view shapes of the ends (openings) on the exhaust gas outflow side of the outflow-side cells 13b are each quadrangular (preferably square or rectangular, more preferably square), the dimensions of the left edges (the edges on the left side in Figures 4 and 5) of the inflow-side cells 13a are preferably the same or almost the same as the dimensions of the left edges (the edges on the left side in Figures 4 and 5) of the outflow-side cells 13b; the dimensions of the right edges (the edges on the right side in Figures 4 and 5) of the inflow-side cells 13a are preferably the same or almost the same as the dimensions of the right edges (the edges on the right side in Figures 4 and 5) of the outflow-side cells 13b; the dimensions of the top edges (the edges on the upper side in Figures 4 and 5) of the inflow-side cells 13a are preferably the same or almost the same as the dimensions of the top edges (the edges on the upper side in Figures 4 and 5) of the outflow-side cells 13b; and the dimensions of the bottom edges (the edges on the lower side in Figures 4 and 5) of the inflow-side cells 13a are preferably the same or almost the same as the dimensions of the bottom edges (the edges on the lower side in Figures 4 and 5) of the outflow-side cells 13b.

In the case where the plan view shapes of the ends (openings) on the exhaust gas inflow side of the inflow-side cells 13a and the plan view shapes of the ends (openings) on the exhaust gas outflow side of the outflow-side cells 13b are each quadrangular (preferably square or rectangular, more preferably square), the left edges of the inflow-side cells 13a and the outflow-side cells 13b arranged in the vertical direction (the edges on the left side in Figures 4 and 5) are preferably aligned along the same straight line or almost the same straight line; the right edges of the inflow-side cells 13a and the outflow-side cells 13b arranged in the vertical direction (the edges on the right side in Figures 4 and 5) are preferably aligned along the same straight line or almost the same straight line; the top edges of the inflow-side cells 13a and the outflow-side cells 13b arranged in the horizontal direction (the edges on the upper side in Figures 4 and 5) are preferably aligned along the same straight line or almost the same straight line; and the bottom edges of the inflow-side cells 13a and the outflow-side cells 13b arranged in the horizontal direction (the edges on the lower side in Figures 4 and 5) are preferably aligned along the same straight line or almost the same straight line.

The cell density per square inch of the substrate 10 can be appropriately adjusted in consideration of PM collection performance, pressure loss, and the like. From the viewpoint of improving PM collection performance and suppressing pressure loss increase, the cell density per square inch of the substrate 10 is preferably 180 cells or more and 350 cells or less. The cell density per square inch of the substrate 10 is the total number of cells 13 (inflow-side cells 13a and outflow-side cells 13b) per square inch in a cross section obtained by cutting the substrate 10 along a plane perpendicular to the axial direction of the substrate 10.

As shown in Figures 2 and 3, the partition wall 12 is provided inside the tubular member 11. The partition wall 12 has a porous structure that allows the exhaust gas to pass through.

As shown in Figures 4 to 6, the partition wall 12 has an outer surface S1a on the inflow-side cell 13a side and an outer surface S1b on the outflow-side cell 13b side. The outer surface S1a is a region of the outer surface that defines the outer shape of the partition wall 12, the region being located on the inflow-side cell 13a side and extending in the exhaust gas flow direction E (i.e., the region in contact with the inflow-side cell 13a). The outer surface S1b is a region of the outer surface that defines the outer shape of the partition wall 12, the region being located on the outflow-side cell 13b side and extending in the exhaust gas flow direction E (i.e., the region in contact with the outflow-side cell 13b).

The thickness of the partition wall 12 can be appropriately adjusted in consideration of PM collection performance, pressure loss, and the like. From the viewpoint of improving PM collection performance and suppressing pressure loss increase, the thickness of the partition wall 12 is preferably 110 $\mu$m or more and 380 $\mu$m or less, more preferably 150 $\mu$m or more and 330 $\mu$m or less, and still more preferably 180 $\mu$m or more and 310 $\mu$m or less.

< First catalyst layer >

As shown in Figures 4 and 6, the first catalyst layer 20 is formed on the inflow-side cell 13a side of the partition wall 12.

As shown in Figure 6, the first catalyst layer 20 extends from the end on the exhaust gas inflow side of the partition wall 12 along the exhaust gas flow direction E. In the present embodiment, the first catalyst layer 20 does not reach the end on the exhaust gas outflow side of the partition wall 12, but may reach the end on the exhaust gas outflow side of the partition wall 12.

As shown in Figures 4 and 6, it is preferable that at least part of the first catalyst layer 20 rises from the outer surface S1a of the partition wall 12 toward the inflow-side cell 13a side, i.e., the first catalyst layer 20 has a portion rising from the outer surface S1a of the partition wall 12 toward the inflow-side cell 13a side (hereinafter referred to as "rising structure"). This improves the contactability of the first catalyst layer 20 with exhaust gas and PM, thereby more effectively improving exhaust gas purification performance and PM collection performance.

The first catalyst layer 20 may be composed only of the rising structure, or may have a portion present inside the partition wall 12 (hereinafter referred to as "internal structure") in addition to the rising structure. Since the partition wall 12 is porous, the internal structure may be formed together with the rising structure when the first catalyst layer 20 is formed. The rising structure and the internal structure may be continuous. The first catalyst layer 20 may be composed only of the internal structure. The expression "the first catalyst layer 20 is formed on the inflow-side cell 13a side of the partition wall 12" encompasses an embodiment wherein the first catalyst layer 20 is composed only of the rising structure, an embodiment wherein the first catalyst layer 20 is composed only of the internal structure, and an embodiment wherein the first catalyst layer 20 has both the rising structure and the internal structure.

The region where the rising structure of the first catalyst layer 20 is present does not overlap with the region where the partition wall 12 is present, whereas the region where the internal structure of the first catalyst layer 20 is present overlaps with the region where the partition wall 12 is present. Therefore, by cutting the catalyst 1 along a plane perpendicular to the axial direction of the substrate 10 and observing the first catalyst layer 20 and the partition wall 12 present in the resulting cross section, the rising structure and the internal structure of the first catalyst layer 20 can be identified based on the difference in morphology between the first catalyst layer 20 and the partition wall 12. When observing the cross section, element mapping of the cross section may be performed. Element mapping can be performed, for example, by combining observation of the cross section using SEM and compositional analysis of the cross section. Element mapping can be performed, for example, using scanning electron microscopy-energy dispersive X-ray spectroscopy (SEM-EDX), an electron probe microanalyzer (EPMA), or the like. By performing element mapping of the cross section, the rising structure and the internal structure can be identified based on the difference in morphology and composition between the first catalyst layer 20 and the partition wall 12.

The average length $L_{20}$ of the first catalyst layer 20 can be adjusted as appropriate in consideration of exhaust gas purification performance, PM collection performance, and the like. From the viewpoint of improving exhaust gas purification performance and PM collection performance, the percentage of the average length $L_{20}$ of the first catalyst layer 20 to the length $L_{10}$ of the substrate 10 ($L_{20} / L_{10} \times 100$) is preferably 15% or more and 90% or less, more preferably 20% or more and 80% or less, and still more preferably 30% or more and 80% or less.

An example of the method of determining the average length $L_{20}$ of the first catalyst layer 20 is as follows:

A sample extending in the axial direction of the substrate 10 and having the same length as the length $L_{10}$ of the substrate 10 is cut out from the catalyst 1. The sample is, for example, in the form of a cylinder having a diameter of 25.4 mm. The value of the diameter of the sample can be changed as necessary. The sample is cut at 5 mm intervals along a plane perpendicular to the axial direction of the substrate 10 to obtain cut pieces, which are referred to as the first cut piece, the second cut piece and so on up to the n-th cut piece, sequentially from the side of the end on the exhaust gas inflow side of the sample. The length of each cut piece is 5 mm. The composition of each cut piece is analyzed using an inductively coupled plasma emission spectrophotometer (ICP-OES), an X-ray fluorescence analyzer (XRF), SEM-EDX, or the like, and it is confirmed whether or not each cut piece includes part of the first catalyst layer 20, based on the composition of each cut piece.

It is not necessarily required to perform the compositional analysis for a cut piece that apparently includes part of the first catalyst layer 20. For example, it is possible to confirm whether or not each cut piece includes part of the first catalyst layer 20, by observing a cross section thereof using SEM, EPMA, or the like. When observing the cross section, element mapping of the cross section may be performed. Element mapping can be performed in the same manner as described above.

After confirming whether or not each cut piece includes part of the first catalyst layer 20, the length of the first catalyst layer 20 included in the sample is determined based on the following formula:

Length of first catalyst layer 20 included in sample = 5 mm × (Number of cut pieces each including part of first catalyst layer 20)

For example, in the case where each of the first cut piece to the k-th cut piece includes part of the first catalyst layer 20, whereas each of the (k + 1)-th to the n-th cut pieces does not include part of the first catalyst layer 20, the length of the first catalyst layer 20 included in the sample is (5 × k) mm.

An example of the method for more specifically determining the length of the first catalyst layer 20 included in the sample is as follows:

The k-th cut piece (i.e., the cut piece closest to the exhaust gas outflow side, among the cut pieces each including part of the first catalyst layer 20) is cut in the axial direction of the substrate 10, and part of the first catalyst layer 20 present in the resulting cross section is observed using SEM, EPMA, or the like, to determine the length of part of the first catalyst layer 20 included in the k-th cut piece. Thereafter, the length of the first catalyst layer 20 included in the sample is determined based on the following formula:

Length of first catalyst layer 20 included in sample = (5 mm × (k-1)) + (Length of part of first catalyst layer 20 included in k-th cut piece)

For 8 to 16 samples arbitrarily cut out from the catalyst 1, the length of the first catalyst layer 20 included in each sample is determined, and the average value of the determined lengths is defined as the average length $L_{20}$ of the first catalyst layer 20.

From the viewpoint of balancing exhaust gas purification performance and cost, the mass (mass after calcination) of the first catalyst layer 20 per unit volume of the portion of the substrate 10 provided with the first catalyst layer 20 is preferably 20 g/L or more and 90 g/L or less, more preferably 30 g/L or more and 70 g/L or less, and still more preferably 35 g/L or more and 60 g/L or less. The mass of the first catalyst layer 20 per unit volume of the portion of the substrate 10 provided with the first catalyst layer 20 is determined based on the formula: (Mass of first catalyst layer 20) / ((Volume of substrate 10) × (Average length $L_{20}$ of first catalyst layer 20 / Length $L_{10}$ of substrate 10)).

In the present specification, the expression "the mass of the first catalyst layer 20" refers to the total of the masses of all metal elements contained in the first catalyst layer 20, wherein the mass(es) of a noble metal element(s) is/are determined in terms of metal, and wherein the mass(es) of a metal element(s) other than the noble metal element(s) is/are determined in terms of oxide. In other words, the expression "the mass of the first catalyst layer 20" refers to the calculated mass obtained by totalizing the mass(es) of the noble metal element(s) contained in the first catalyst layer 20 in terms of metal and the mass(es) of the metal element(s) other than the noble metal element(s) contained in the first catalyst layer 20 in terms of oxide. The term "metal element" encompasses metalloid elements such as Si and B.

In the present specification, the term "noble metal element" encompasses Au, Ag, Pt, Pd, Rh, Ru, Ir, and Os.

In the present specification, the term "oxide of a rare earth element other than Ce, Pr and Tb" refers to a sesqui oxide ($M_2O_3$, wherein M represents a rare earth element other than Ce, Pr and Tb), the term "oxide of Ce" refers to $CeO_2$, the term "oxide of Pr" refers to $Pr_6O_{11}$, the term "oxide of Tb" refers to $Tb_4O_7$, the term "oxide of Al" refers to $Al_2O_3$, the term "oxide of Zr" refers to $ZrO_2$, the term "oxide of Si" refers to $SiO_2$, the term "oxide of B" refers to $B_2O_3$, the term "oxide of Cr" refers to $Cr_2O_3$, the term "oxide of Mg" refers to MgO, the term "oxide of Ca" refers to CaO, the term "oxide of Sr" refers to SrO, the term "oxide of Ba" refers to BaO, the term "oxide of Fe" refers to $Fe_3O_4$, the term "oxide of Mn" refers to $Mn_3O_4$, the term "oxide of Ni" refers to NiO, the term "oxide of Ti" refers to $TiO_2$, the term "oxide of Zn" refers to ZnO, and the term "oxide of Sn" refers to $SnO_2$.

< Second catalyst layer >

As shown in Figures 5 and 6, the second catalyst layer 30 is formed on the outflow-side cell 13b side of the partition wall 12.

As shown in Figure 6, the second catalyst layer 30 extends from the end on the exhaust gas outflow side of the partition wall 12 along the direction opposite to the exhaust gas flow direction E. In the present embodiment, the second catalyst layer 30 does not reach the end on the exhaust gas inflow side of the partition wall 12, but may reach the end on the exhaust gas inflow side of the partition wall 12.

As shown in Figures 5 and 6, it is preferable that at least part of the second catalyst layer 30 rises from the outer surface S1b of the partition wall 12 toward the outflow-side cell 13b side, i.e., the second catalyst layer 30 has a portion rising from the outer surface S1b of the partition wall 12 toward the outflow-side cell 13b side (hereinafter referred to as "rising structure"). This improves the contactability of the second catalyst layer 30 with exhaust gas and PM, thereby more effectively improving exhaust gas purification performance and PM collection performance.

The second catalyst layer 30 may be composed only of the rising structure, or may have a portion present inside the partition wall 12 (hereinafter referred to as "internal structure") in addition to the rising structure. Since the partition wall 12 is porous, the internal structure may be formed together with the rising structure when the second catalyst layer 30 is formed. The rising structure and the internal structure may be continuous. The second catalyst layer 30 may be composed only of the internal structure. The expression "the second catalyst layer 30 is formed on the outflow-side cell 13b side of the partition wall 12" encompasses an embodiment wherein the second catalyst layer 30 is composed only of the rising structure, an embodiment wherein the second catalyst layer 30 is composed only of the internal structure, and an embodiment wherein the second catalyst layer 30 has both the rising structure and the internal structure.

The above description with respect to the identification method of the rising structure and internal structure of the first catalyst layer 20 is also applied to the second catalyst layer 30. Upon application, the "first catalyst layer 20" is replaced with the "second catalyst layer 30".

The average length $L_{30}$ of the second catalyst layer 30 can be appropriately adjusted in consideration of exhaust gas purification performance, PM collection performance, and the like. From the viewpoint of improving exhaust gas purification performance and PM collection performance, the percentage of the average length $L_{30}$ of the second catalyst layer 30 to the length $L_{10}$ of the substrate 10 ($L_{30} / L_{10} \times 100$) is preferably 15% or more and 90% or less, more preferably 20% or more and 80% or less, and still more preferably 30% or more and 80% or less.

From the viewpoint of improving exhaust gas purification performance and PM collection performance, the percentage of the total of the average length $L_{20}$ of the first catalyst layer 20 and the average length $L_{30}$ of the second catalyst layer 30 to the length $L_{10}$ of the substrate 10 (($L_{20} + L_{30}$) / $L_{10} \times 100$) is preferably 100% or more and 180% or less, more preferably 105% or more and 150% or less, and still more preferably 110% or more and 130% or less.

The above description with respect to the method for determining the average length $L_{20}$ of the first catalyst layer 20 is also applied to the second catalyst layer 30. Upon application, the "first catalyst layer 20" is replaced with the "second catalyst layer 30". However, in the method of determining the average length $L_{30}$ of the second catalyst layer 30, the sample is cut at 5 mm intervals along a plane perpendicular to the axial direction of the substrate 10 to obtain cut pieces, which are referred to as the first cut piece, the second cut piece and so on up to the n-th cut piece, sequentially from the side of the end on the exhaust gas outflow side of the sample.

From the viewpoint of balancing exhaust gas purification performance and cost, the mass (mass after calcination) of the second catalyst layer 30 per unit volume of the portion of the substrate 10 provided with the second catalyst layer 30 is preferably 20 g/L or more and 90 g/L or less, more preferably 30 g/L or more and 70 g/L or less, and still more preferably 35 g/L or more and 60 g/L or less. The mass of the second catalyst layer 30 per unit volume of the portion of the substrate 10 provided with the second catalyst layer 30 is determined from the formula: (Mass of second catalyst layer 30) / ((Volume of substrate 10) $\times$ (Average length $L_{30}$ of second catalyst layer 30 / Length $L_{10}$ of substrate 10)).

The above description with respect to the expression "the mass of the first catalyst layer 20" is also applied to the expression "the mass of second catalyst layer 30". Upon application, the "first catalyst layer 20" is replaced with the "second catalyst layer 30".

< Parameters according to present invention >

In the present specification, the gas permeability of the first catalyst layer 20 and the partition wall 12 as determined using a permporometer is designated as Ra ($cm^3/(cm^2 \cdot s \cdot Pa)$); the 50% flow pore diameter of the first catalyst layer 20 and the partition wall 12 as determined by a bubble point method using a permporometer is designated as Xa ($\mu m$); the 10% flow pore diameter of the first catalyst layer 20 and the partition wall 12 as determined by a bubble point method using a permporometer is designated as Ya ($\mu m$); the gas permeability of the second catalyst layer 30 and the partition wall 12 as determined using a permporometer is designated as Rb ($cm^3/(cm^2 \cdot s \cdot Pa)$); the 50% flow pore diameter of the second catalyst layer 30 and the partition wall 12 as determined by a bubble point method using a permporometer is designated as Xb ($\mu m$); and the 10% flow pore diameter of the second catalyst layer 30 and the partition wall 12 as determined by a bubble point method using a permporometer is designated as Yb ($\mu m$).

The catalyst 1 satisfies the following formulae 1a and 2a:

$$1.30 \times 10^{-3} \leq Ra \qquad ... (1a)$$

$$Xa \times Ya \leq 8.00 \qquad ... (2a)$$

and/or satisfies the following formulae 1b and 2b:

$$1.30 \times 10^{-3} \leq Rb \qquad ... (1b)$$

$$Xb \times Yb \leq 8.00 \qquad ... (2b).$$

When the catalyst 1 satisfies the formulae 1a and 2a, the first catalyst layer 20 and the partition wall 12 can achieve both improvement of PM collection performance and suppression of pressure loss increase.

In view of more effectively achieving both improvement of PM collection performance and suppression of pressure loss increase, the catalyst 1 preferably satisfies one or more of formulae 3a, 4a, and 5a, which will be described later, in addition to the formulae 1a and 2a.

When the catalyst 1 satisfies the formulae 1b and 2b, the second catalyst layer 30 and the partition wall 12 can achieve both improvement of PM collection performance and suppression of pressure loss increase.

In view of more effectively achieving both improvement of PM collection performance and suppression of pressure loss increase, the catalyst 1 preferably satisfies one or more of formulae 3b, 4b, and 5b, which will be described later, in addition to the formulae 1b and 2b.

< Gas permeability >

Hereinafter, Ra ($cm^3/(cm^2 \cdot s \cdot Pa)$), i.e., the gas permeability of the first catalyst layer 20 and the partition wall 12 will be described. The term "partition wall 12" in the expression "the gas permeability of the first catalyst layer 20 and the partition wall 12" refers to the portion of the partition wall 12 where the first catalyst layer 20 is provided.

The method for determining Ra will be described below.

A sample extending in the axial direction of the substrate 10 and having the same length as the length $L_{10}$ of the substrate 10 is cut out from the catalyst 1. The number of the inflow-side cells 13a included in the sample is the same as the number of the outflow-side cells 13b included in the sample. The plan view shape of the sample when the sample is planarly viewed from the axis direction of the sample is, for example, quadrangular (preferably square or rectangular, more preferably square). The size of the plan view shape when the sample is planarly viewed from the axis direction is not particularly limited as long as the number of the inflow-side cells 13a included in the sample is the same as the number of the outflow-side cells 13b included in the sample. For example, the dimension in the vertical direction is 10 mm, and the dimension in the horizontal direction is 10 mm. In the case where the inflow-side cells 13a and the outflow-side cells 13b are arranged alternately in both the vertical direction and the horizontal direction, and the total number of the inflow-side cells 13a and the outflow-side cells 13b arranged in the vertical direction of the sample and the total number of the inflow-side cells 13a and the outflow-side cells 13b arranged in the horizontal direction of the sample are each an even integer, the number of the inflow-side cells 13a included in the sample is the same as the number of the outflow-side cells 13b included in the sample.

The sample is cut along a plane perpendicular to the axis direction of the sample to obtain a cut piece P1, which includes part of the first catalyst layer 20 and does not include part of the second catalyst layer 30. The cut piece P1 can be obtained from the vicinity of the end on the exhaust gas inflow side of the sample. The length of the cut piece P1 in the axis direction is not particularly limited, and is 10 mm, for example. The length of the part of the first catalyst layer 20 included in the cut piece P1 is equal to the length of the cut piece P1 in the axis direction. The cut piece P1 includes neither the first sealing member 14 nor the second sealing member 15.

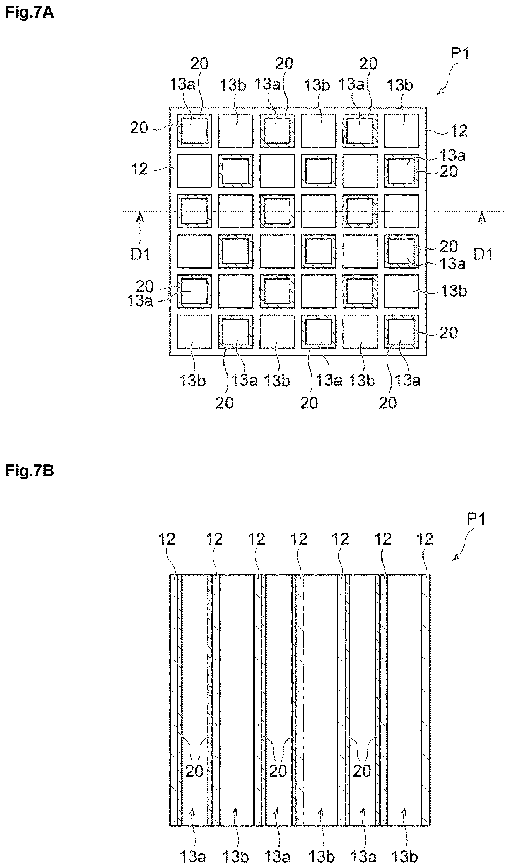

An example of the cut piece P1 is shown in Figures 7A and 7B. The cut piece P1 is in the form of, for example, a cube having a dimension of 10 mm in the vertical direction (in the vertical direction in Figure 7A), a dimension of 10 mm in the horizontal direction (in the horizontal direction in Figure 7A), and a dimension of 10 mm in the axis direction (in the vertical direction in Figure 7B). The cut piece P1 shown in Figures 7A and 7B can be obtained by cutting the sample along planes perpendicular to the axis direction of the sample at two locations, for example, 10 and 20 mm respectively away from the end on the exhaust gas inflow side of the sample in the axis direction of the sample. As shown in Figure 7B, the length of the part of the first catalyst layer 20 included in the cut piece P1 is equal to the length of the cut piece P1 in the axis direction. As shown in Figures 7A and 7B, the cut piece P1 includes neither the first sealing member 14 nor the second sealing member 15.

A first sealing member for sealing the ends on the exhaust gas outflow side of the inflow-side cells 13a included in the cut piece P1 and a second sealing member for sealing the ends on the exhaust gas inflow side of the outflow-side cells 13b included in the cut piece P1 are formed on the cut piece P1, and a third sealing member is formed on the outermost periphery of the cut piece P1, to thereby obtain a cut piece P1'. The first sealing member, the second sealing member, and the third sealing member can be formed by applying a sealing material to the respective predetermined sites of the cut piece P1. As the sealing material, an adhesive such as epoxy resin-based adhesive can be used, for example.

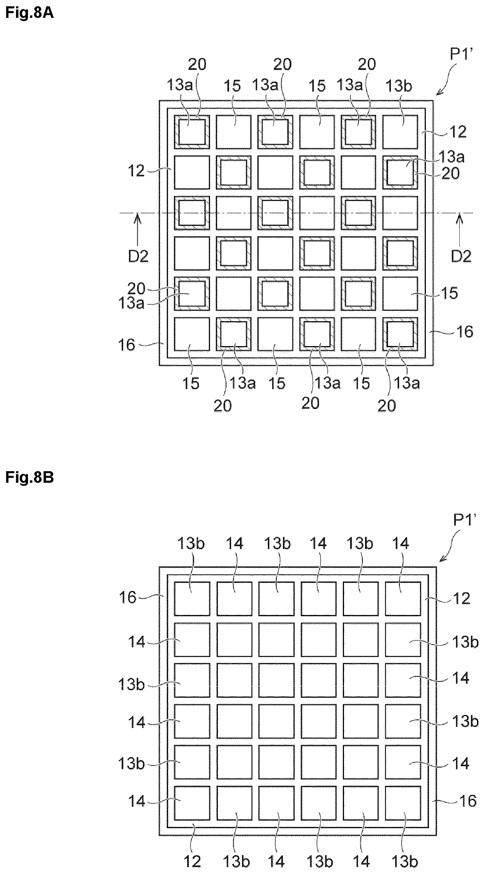

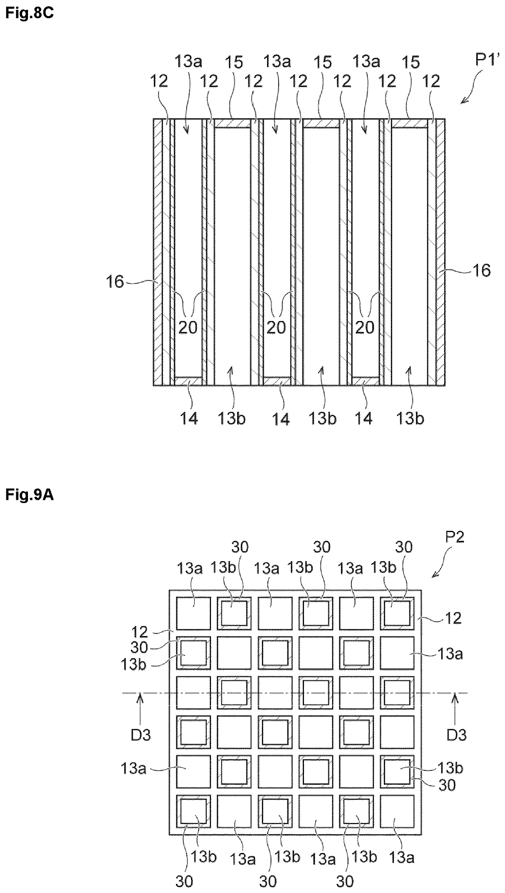

In the case where the cut piece P1 shown in Figures 7A and 7B is used, the first sealing member 14 for sealing the ends on the exhaust gas outflow side (the lower side of Figure 8C) of the inflow-side cells 13a included in the cut piece P1 and the second sealing member 15 for sealing the ends on the exhaust gas inflow side (the upper side of Figure 8C) of the outflow-side cells 13b included in the cut piece P1 are formed on the cut piece P1, and the third sealing member 16 is formed on the outermost periphery of the cut piece P1, to thereby obtain a cut piece P1', as shown in Figures 8A to 8C. The first sealing member 14, the second sealing member 15, and the third sealing member 16 can be formed by applying a sealing material to the respective predetermined sites of the cut piece P1. As the sealing material, an adhesive such as epoxy resin-based adhesive can be used, for example. The thicknesses of the first sealing member 14 and the second sealing member 15 are each equal to or less than one-tenth of the length of the cut piece P1' in the axis direction (the vertical direction in Figure 8C).

The method for determining Ra will be described below by way of an exemplary case of using the cut piece P1' shown in Figures 8A to 8C, for the sake of explanatory convenience. The description given below can be also applied to cases of using another cut piece P1'.

The cut piece P1' is set on a holder of a permporometer. A gas is allowed to flow through the cut piece P1' at 1 to 200 L/min while varying the gas pressure, and the gas flow rate under pressure is determined. The gas allowed to flow is air. As the permporometer, a permporometer manufactured by Porous Materials Inc. (e.g., CFP-1100A) can be used, for example. The gas is allowed to flow from the ends (opening) on the exhaust gas inflow side (the upper side of Figure 8C) of the inflow-side cells 13a included in the cut piece P1'. The gas flowing from the ends (openings) on the exhaust gas inflow side (the upper side of Figure 8C) of the inflow-side cells 13a passes through the first catalyst layer 20 and the partition wall 12, and flows out from the ends (opening) on the exhaust gas outflow side (the lower side of Figure 8C) of the outflow-side cells 13b.

From the following formula, the gas permeability is determined when the pressure difference between the location on the upstream side (the upper side of Figure 8C) and the location on the downstream side (the lower side of Figure 8C) in the gas flowing direction with respect to the cut piece P1' during gas flow ((the pressure at the location on the upstream side in the gas flowing direction with respect to the cut piece P1' during gas flow) - (the pressure at the location on the downstream side in the gas flowing direction with respect to the cut piece P1' during gas flow)) is 10 kPa. The pressure at the location on the upstream side in the gas flowing direction with respect to the cut piece P1' during gas flow is controlled by the permporometer. The downstream side in the gas flowing direction with respect to the cut piece P1' during gas flow is open to the atmosphere, and thus the pressure at the location on the downstream side in the gas flowing direction with respect to the cut piece P1' during gas flow is equal to the atmospheric pressure.

$$R = Q/A_1 M_1$$

wherein

R represents the gas permeability (unit: $cm^3/(cm^2 \cdot s \cdot Pa)$),
Q represents the gas flow rate (unit: $cm^3/s$) under pressure,
$A_1$ represents the effective filtration area (unit: $cm^2$) of the cut piece P1', and
$M_1$ represents the pressure difference (unit: Pa) between the location on the upstream side and the location on the downstream side in the gas flowing direction with respect to the cut piece P1' during gas flow.

$A_1$ can be determined from the following formula:

$$A_1 = \alpha_1 \times \beta_1 \times \gamma_1$$

wherein

$\alpha_1$ represents the average dimension (unit: cm) of one edge of the opening of the inflow-side cell 13a,
$\beta_1$ represents the length (unit: cm) of the cut piece P1' in the axis direction, and
$\gamma_1$ represents the number of the effective filtration faces of the cut piece P1'.

$\alpha_1$ can be determined from the following formula:

$$\alpha_1 = \text{Average distance D1} - \text{Average thickness T of partition wall 12}$$

The average distance D1 (unit: cm) can be determined by the following method.

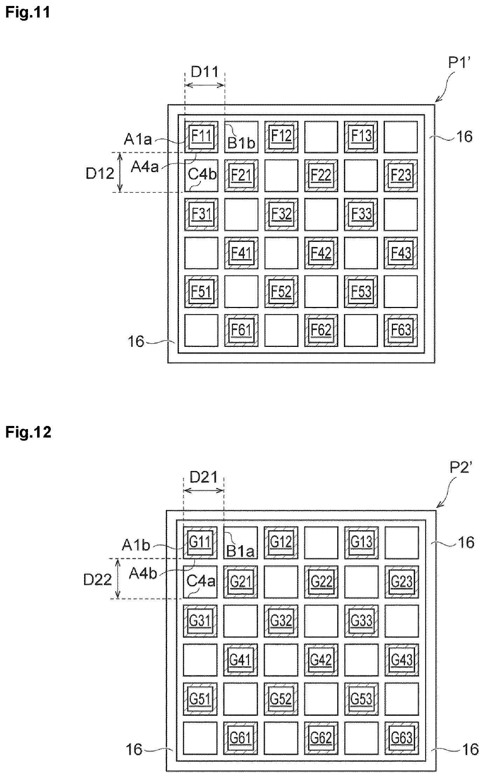

Among four edges constituting the opening of a given inflow-side cell 13a in the plan view of the cut piece P1' shown in Figure 11, the left edge in Figure 11 is designated as "left edge A1a", the right edge in Figure 11 is designated as "right edge A2a", the top edge in Figure 11 is designated as "top edge A3a", and the bottom edge in Figure 11 is designated as "bottom edge A4a". Among four edges constituting the opening of an outflow-side cell 13b adjacent to the right side or the left side of the inflow-side cell 13a, the left edge in Figure 11 is designated as "left edge B1b", the right edge in Figure 11 is designated as "right edge B2b", the top edge in Figure 11 is designated as "top edge B3b", and the bottom edge in Figure 11 is designated as "bottom edge B4b". Among four edges constituting the opening of an outflow-side cell 13b adjacent to the lower side or the upper side of the inflow-side cell 13a, the left edge in Figure 11 is designated as "left edge C1b", the right edge in Figure 11 is designated as "right edge C2b", the top edge in Figure 11 is designated as "top edge C3b", and the bottom edge in Figure 11 is designated as "bottom edge C4b". The four edges constituting the opening of the inflow-side cell 13a described above are edges formed by the outer surface S1a of the partition wall 12 of the substrate 10 (see Figures 4 to 6) in the cut piece P1'. The four edges constituting the opening of the outflow-side cell 13b described above are edges formed by the outer surface S1b of the partition wall 12 of the substrate 10 (see Figures 4 to 6) in the cut piece P1'.

In the plan view of the cut piece P1' shown in Figure 11, measurement is made for the distance (unit: cm) between the left edge A1a of the opening of the inflow-side cell 13a and the left edge B1b of the opening of the outflow-side cell 13b, and the resulting distance is designated as a distance D11. Alternatively, measurement may be made for the distance (unit: cm) between the right edge A2a of the opening of the inflow-side cell 13a and the right edge B2b of the opening of the outflow-side cell 13b, and the resulting distance may be designated as the distance D11. The distance D11 can be considered as the total of the dimension of the top edge A3a or the bottom edge A4a of the opening of the inflow-side cell 13a and the thickness of the partition wall 12.

For each of twenty inflow-side cells 13a arbitrarily selected in the plan view of the cut piece P1' shown in Figure 11 and the respective outflow-side cells 13b adjacent thereto, the distance D11 is determined in the same manner as described above, and the average thereof is designated as an average distance D11'.

In the plan view of the cut piece P1' shown in Figure 11, measurement is made for the distance (unit: cm) between the bottom edge A4a of the opening of the inflow-side cell 13a and the bottom edge C4b of the opening of the outflow-side cell 13b, and the resulting distance is designated as a distance D12. Alternatively, measurement may be made for the distance (unit: cm) between the top edge A3a of the opening of the inflow-side cell 13a and the top edge C3b of the opening of the outflow-side cell 13b, and the resulting distance may be designated as the distance D12. The distance D12 can be considered as the total of the dimension of the left edge A1a or the right edge A2a of the opening of the inflow-side cell 13a and the thickness of the partition wall 12.

For each of twenty inflow-side cells 13a arbitrarily selected in the plan view of the cut piece P1' shown in Figure 11 and the respective outflow-side cells 13b adjacent thereto, the distance D12 is determined in the same manner as described above, and the average thereof is designated as an average distance D12'.

The average distance D1 can be determined as the average of the average distance D11' and the average distance D12' (i.e., D1 = (D11' + D12') / 2).

In the case where the average distance D11' is equal to the average distance D12', the average distance D11' or the average distance D12' can be considered as the average distance D1 (i.e., D1 = D11' or D1 = D12').

The average thickness T of the partition wall 12 (unit: cm) can be determined by the following method.

At a given position in the catalyst 1 (for example, the position 10 mm away from the end on the exhaust gas inflow side of the substrate 10 in the exhaust gas flow direction E), the catalyst 1 is cut along a plan perpendicular to the axis direction of the substrate 10. The first catalyst layer 20 present in an inflow-side cell 13a arbitrarily selected in the cut surface is observed with a scanning electron microscope (SEM), and the region where the partition wall 12 of the substrate 10 is present and the region where the first catalyst layer 20 is present are identified. When the cut surface is observed with a SEM, the magnification of the field of view is x300, for example, and the width (dimension) of the field of view is 500 to 600 μm, for example. It is preferable to set the region to be observed with a SEM so as to include no corner of the inflow-side cell 13a. The region where the partition wall 12 of the substrate 10 is present and the region where the first catalyst layer 20 is present can be identified on the basis of the difference in morphology between the first catalyst layer 20 and the partition wall 12 of the substrate 10. On this occasion, elemental mapping can be carried out on the cut surface. The elemental mapping can be carried out in the same manner as described above. By the elemental mapping on the cut surface, the region where the partition wall 12 of the substrate 10 is present and the region where the first catalyst layer 20 is present can be identified on the basis of the difference in morphology and composition between the first catalyst layer 20 and the partition wall 12 of the substrate 10.

In an SEM image, the first to the N-th grid lines parallel to the thickness direction of the partition wall 12 of the substrate 10 are drawn at 15 μm intervals sequentially from the leftmost or rightmost side of the image. The intersections of the outline on the inflow-side cell side of the region where the partition wall 12 of the substrate 10 is present and the respective grid lines are connected with straight lines to identify the position of the surface on the inflow-side cell side of the partition wall 12 of the substrate 10. N is an integer of 30 to 50, for example. In the same manner, the intersections of the outline on the outflow-side cell side of the region where the partition wall 12 of the substrate 10 is present and the respective grid lines are connected with straight lines to identify the position of the surface on the outflow-side cell side of the partition wall 12 of the substrate 10. In the case where the variation in the thickness direction from a given intersection X1 to an intersection X2 adjacent to the intersection X1 is larger than the interval between the grid lines (15 $\mu$m), it is preferable that the intersection X2 is not used for identification of the position of the surface (that is, the intersection X2 is excluded from intersections connected with straight lines). The variation in the thickness direction from a given intersection X1 to the intersection X2 adjacent to the intersection X1 refers to the distance between the straight line passing through the intersection X1 and being perpendicular to the thickness direction of the partition wall 12 of the substrate 10 and the straight line passing through the intersection X2 and being perpendicular to the thickness direction of the partition wall 12 of the substrate 10. In the case where the variation in the thickness direction from the intersection X1 to the intersection X2 adjacent to the intersection X1 and also the variation in the thickness direction from the intersection X1 to an intersection X3 adjacent to the intersection X2 are each larger than the interval between the grid lines (15 $\mu$m), it is preferable that not only the intersection X2 but also the intersection X3 are not used for identification of the position of the surface (that is, the intersection X2 and the intersection X3 are excluded from intersections connected with straight lines). In the case where five consecutive intersections are excluded from intersections connected with straight lines in such a manner, it is preferable that measurement of the thickness is not carried out in such an SEM image.

After the position of the surface on the inflow-side cell side of the partition wall 12 of the substrate 10 and the position of the surface on the outflow-side cell side of the partition wall 12 of the substrate 10 are identified, image analysis software is used to determine the area of the region surrounded by the second grid line; the (N-1)-th grid line; the surface on the inflow-side cell side of the partition wall 12 of the substrate 10; and the surface on the outflow-side cell side of the partition wall 12 of the substrate 10. As the image analysis software, Area Q (manufactured by S-Tech Corporation), Image J (public domain), or Photoshop (manufactured by Adobe Systems Co., Ltd.) can be used, for example. Since both end portions in the image are likely to be indistinct, it is difficult to identify the position of the surface of the partition wall 12 therein, and thus the first grid line and the N-th grid line are not used.

After the area of the above-described region is determined, the thickness of the region is determined from the following formula.

$$\text{Thickness of region} = \text{Area of region} / (\text{Interval between grid lines} \times \text{Number of intervals between grid lines})$$

The interval between the grid lines is 15 $\mu$m, and the number of intervals between the grid lines is (N-3).

For twenty inflow-side cells 13a arbitrarily selected in the cut surface, the thicknesses of the regions as described above are determined, and the average thereof is defined as the average thickness T of the partition wall 12.

$\beta_1$ can be determined by measuring the length of the cut piece P1' (the length of the cut piece P1' in the axis direction).

$\gamma_1$ can be determined by the following method.

As shown in Figures 2 to 6, the plan view shapes of the ends (openings) on the exhaust gas inflow side of the inflow-side cells 13a and the plan view shapes of the ends (openings) on the exhaust gas outflow side of the outflow-side cells 13b are each quadrangular (preferably square or rectangular, more preferably square). Accordingly, as shown in Figures 4 and 5, the outer surface S1a of the partition wall 12 in contact with a single inflow-side cell 13a is composed of four faces, and the outer surface S1b of the partition wall 12 in contact with a single outflow-side cell 13b is composed of four faces.

For all inflow-side cells 13a included in the cut piece P1', the number of faces is determined, the faces being not adjacent to the third sealing member 16 in the outer surface S1a (four faces) of the partition wall 12 in contact with each inflow-side cell 13a, and the total number thereof is defined as $\gamma_1$. The specific details are as follows.

In the plan view of the cut piece P1' shown in Figure 11, three inflow-side cells 13a and three outflow-side cells 13b are arranged in a single row in the horizontal direction in Figure 11. The rows are designated as "first row F1", "second row F2", "third row F3", "fourth row F4", "fifth row F5", and "sixth row F6", respectively, in order from the top side of Figure 11. The three inflow-side cells 13a in the first row F1 are designated as "inflow-side cell F11", "inflow-side cell F12", and "inflow-side cell F13", respectively, in order from the left side of Figure 11. The three inflow-side cells 13a in the second row F2 are designated as "inflow-side cell F21", "inflow-side cell F22", and "inflow-side cell F23", respectively, in order from the left side of Figure 11. The three inflow-side cells 13a in the third row F3 are designated as "inflow-side cell F31", "inflow-side cell F32", and "inflow-side cell F33", respectively, in order from the left side of Figure 11. The three inflow-side cells 13a in the fourth row F4 are designated as "inflow-side cell F41", "inflow-side cell F42", and "inflow-side cell F43", respectively, in order from the left side of Figure 11. The three inflow-side cells 13a in the fifth row F5 are designated as "inflow-side cell F51", "inflow-side cell F52", and "inflow-side cell F53", respectively, in order from the left side of Figure 11. The three inflow-side cells 13a in the sixth row F6 are designated as "inflow-side cell F61", "inflow-side cell F62", and "inflow-side cell F63", respectively, in order from the left side of Figure 11.

In the outer surface S1a (four faces) of the partition wall 12 in contact with the inflow-side cell F11, the left face (the face on the left side in Figure 11) and the top face (the face on the top side in Figure 11) are adjacent to the third sealing member 16. Accordingly, in the outer surface S1a (four faces) of the partition wall 12 in contact with the inflow-side cell F11, the number of faces that are not adjacent to the third sealing member 16 is two.

In the outer surface S1a (four faces) of the partition wall 12 in contact with the inflow-side cell F63, the right face (the face on the right side in Figure 11) and the bottom face (the face on the bottom side in Figure 11) are adjacent to the third sealing member 16. Accordingly, in the outer surface S1a (four faces) of the partition wall 12 in contact with the inflow-side cell F63, the number of faces that are not adjacent to the third sealing member 16 is two.

In the outer surface S1a (four faces) of the partition wall 12 in contact with the inflow-side cell F12 or F13, the top face (the face on the top side in Figure 11) is adjacent to the third sealing member 16. Accordingly, in the outer surface S1a (four faces) of the partition wall 12 in contact with the inflow-side cell F12 or F13, the number of faces that are not adjacent to the third sealing member 16 is three.

In the outer surface S1a (four faces) of the partition wall 12 in contact with the inflow-side cell F23 or F43, the right face (the face on the right side in Figure 11) is adjacent to the third sealing member 16. Accordingly, in the outer surface S1a (four faces) of the partition wall 12 in contact with the inflow-side cell F23 or F43, the number of faces that are not adjacent to the third sealing member 16 is three.

In the outer surface S1a (four faces) of the partition wall 12 in contact with the inflow-side cell F31 or F51, the left face (the face on the left side in Figure 11) is adjacent to the third sealing member 16. Accordingly, in the outer surface S1a (four faces) of the partition wall 12 in contact with the inflow-side cell F31 or F51, the number of faces that are not adjacent to the third sealing member 16 is three.

In the outer surface S1a (four faces) of the partition wall 12 in contact with the inflow-side cell F61 or F62, the bottom face (the face on the bottom side in Figure 11) is adjacent to the third sealing member 16. Accordingly, in the outer surface S1a (four faces) of the partition wall 12 in contact with the inflow-side cell F61 or F62, the number of faces that are not adjacent to the third sealing member 16 is three.

In the outer surface S1a (four faces) of the partition wall 12 in contact with the inflow-side cell F21, F22, F32, F33, F41, F42, F52, or F53, no face is adjacent to the third sealing member 16. Accordingly, in the outer surface S1a (four faces) of the partition wall 12 in contact with the inflow-side cell F21, F22, F32, F33, F41, F42, F52, or F53, the number of faces that are not adjacent to the third sealing member 16 is four.

From the above, the number of the effective filtration faces in the cut piece P1' is $2 \times 2$ (inflow-side cells F11 and F63) + $3 \times 8$ (inflow-side cells F12, F13, F23, F31, F43, F51, F61, and F62) + $4 \times 8$ (inflow-side cells F21, F22, F32, F33, F41, F42, F52, and F53) = 60.

For three cut pieces P1', the respective gas permeabilities are determined, and the average thereof is defined as the gas permeability Ra ($cm^3/(cm^2 \cdot s \cdot Pa)$) of the first catalyst layer 20 and the partition wall 12.

In the determination method described above, non-through pores are not subjected to determination, and only through pores in the first catalyst layer 20 and the partition wall 12 are subjected to determination. Accordingly, by the determination method described above, the gas permeability of the first catalyst layer 20 and the partition wall 12 can be accurately determined.

Ra ($cm^3/(cm^2 \cdot s \cdot Pa)$) satisfies the formula 1a. That is, Ra is $1.30 \times 10^{-3}$ ($cm^3/(cm^2 \cdot s \cdot Pa)$) or more. Ra is an index representing the exhaust gas permeability of the first catalyst layer 20 and the partition wall 12. As Ra increases, the exhaust gas permeability of the first catalyst layer 20 and the partition wall 12 becomes greater. When Ra is $1.30 \times 10^{-3}$ ($cm^3/(cm^2 \cdot s \cdot Pa)$) or more, the exhaust gas permeability of the first catalyst layer 20 and the partition wall 12 is sufficient, and this contributes to achieving both improvement of PM collection performance and suppression of pressure loss increase.

In view of more effectively achieving both improvement of PM collection performance and suppression of pressure loss increase, Ra is preferably $1.50 \times 10^{-3}$ ($cm^3/(cm^2 \cdot s \cdot Pa)$) or more, more preferably $1.70 \times 10^{-3}$ ($cm^3/(cm^2 \cdot s \cdot Pa)$) or more, still more preferably $1.90 \times 10^{-3}$ ($cm^3/(cm^2 \cdot s \cdot Pa)$) or more.

If Ra is too large, exhaust gas may pass through the first catalyst layer 20 and the partition wall 12 without sufficiently diffusing inside the first catalyst layer 20 and the partition wall 12. In view of improving the ease of exhaust gas to diffuse inside the first catalyst layer 20 and the partition wall 12 to improve both exhaust gas purification performance and PM collection performance, Ra is preferably $2.00 \times 10^{-2}$ ($cm^3/(cm^2 \cdot s \cdot Pa)$)or less, more preferably $1.90 \times 10^{-2}$ ($cm^3/(cm^2 \cdot s \cdot Pa)$) or less, still more preferably $1.80 \times 10^{-2}$ ($cm^3/(cm^2 \cdot s \cdot Pa)$) or less. Each of these upper limits can be combined with any of the lower limits described above.

Hereinafter, Rb ($cm^3/(cm^2 \cdot s \cdot Pa)$), i.e., the gas permeability of the second catalyst layer 30 and the partition wall 12 will be described. The term "partition wall 12" in the expression "the gas permeability of the second catalyst layer 30 and the partition wall 12" refers to the portion of the partition wall 12 where the second catalyst layer 30 is provided.

The method for determining Rb will be described below.

A sample extending in the axial direction of the substrate 10 and having the same length as the length $L_{10}$ of the substrate 10 is cut out from the catalyst 1. The number of the inflow-side cells 13a included in the sample is the same as the number of the outflow-side cells 13b included in the sample. The plan view shape of the sample when the sample is planarly viewed from the axis direction of the sample is, for example, quadrangular (preferably square or rectangular, more preferably square). The size of the plan view shape when the sample is planarly viewed from the axis direction is not particularly limited as long as the number of the inflow-side cells 13a included in the sample is the same as the number of the outflow-side cells 13b included in the sample. For example, the dimension in the vertical direction is 10 mm, and the dimension in the horizontal direction is 10 mm. In the case where the inflow-side cells 13a and the outflow-side cells 13b are arranged alternately in both the vertical direction and the horizontal direction, and the total number of the inflow-side cells 13a and the outflow-side cells 13b arranged in the vertical direction of the sample and the total number of the inflow-side cells 13a and the outflow-side cells 13b arranged in the horizontal direction of the sample are each an even integer, the number of the inflow-side cells 13a included in the sample is the same as the number of the outflow-side cells 13b included in the sample.

The sample is cut along a plane perpendicular to the axis direction of the sample to obtain a cut piece P2, which includes part of the second catalyst layer 30 and does not include part of the first catalyst layer 20. The cut piece P2 can be obtained from the vicinity of the end on the exhaust gas outflow side of the sample. The length of the cut piece P2 in the axis direction is not particularly limited, and is 10 mm, for example. The length of the part of the second catalyst layer 30 included in the cut piece P2 is equal to the length of the cut piece P2 in the axis direction. The cut piece P2 includes neither the first sealing member 14 nor the second sealing member 15.

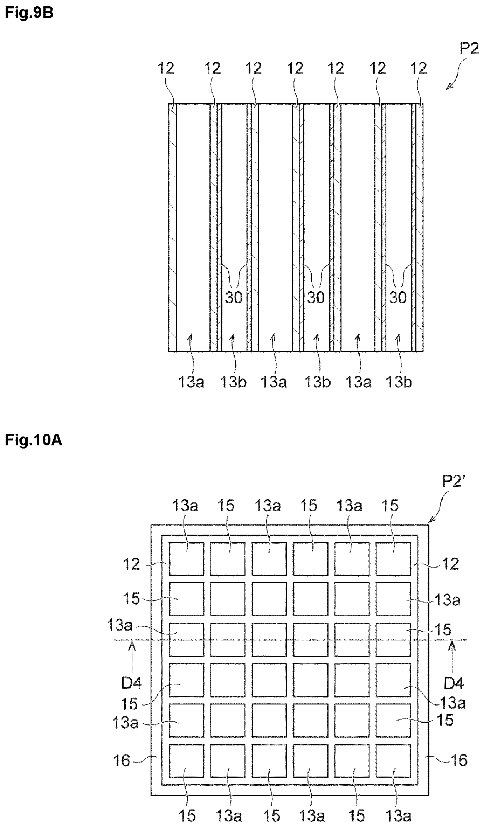

An example of the cut piece P2 is shown in Figures 9A and 9B. The cut piece P2 is in the form of, for example, a cube having a dimension of 10 mm in the vertical direction (in the vertical direction in Figure 9A), a dimension of 10 mm in the horizontal direction (in the horizontal direction in Figure 9A), and a dimension of 10 mm in the axis direction (in the vertical direction in Figure 9B). The cut piece P2 shown in Figures 9A and 9B can be obtained by cutting the sample along planes perpendicular to the axis direction of the sample at two locations, for example, 10 and 20 mm respectively away from the end on the exhaust gas outflow side of the sample in the axis direction of the sample. As shown in Figure 9B, the length of the part of the second catalyst layer 30 included in the cut piece P2 is equal to the length of the cut piece P2 in the axis direction. As shown in Figures 9A and 9B, the cut piece P2 includes neither the first sealing member 14 nor the second sealing member 15.

A first sealing member for sealing the ends on the exhaust gas outflow side of the inflow-side cells 13a included in the cut piece P2 and a second sealing member for sealing the ends on the exhaust gas inflow side of the outflow-side cells 13b included in the cut piece P2 are formed on the cut piece P2, and a third sealing member is formed on the outermost periphery of the cut piece P2, to thereby obtain a cut piece P2'. The first sealing member, the second sealing member, and the third sealing member can be formed by applying a sealing material to the respective predetermined sites of the cut piece P2. As the sealing material, an adhesive such as epoxy resin-based adhesive can be used, for example.

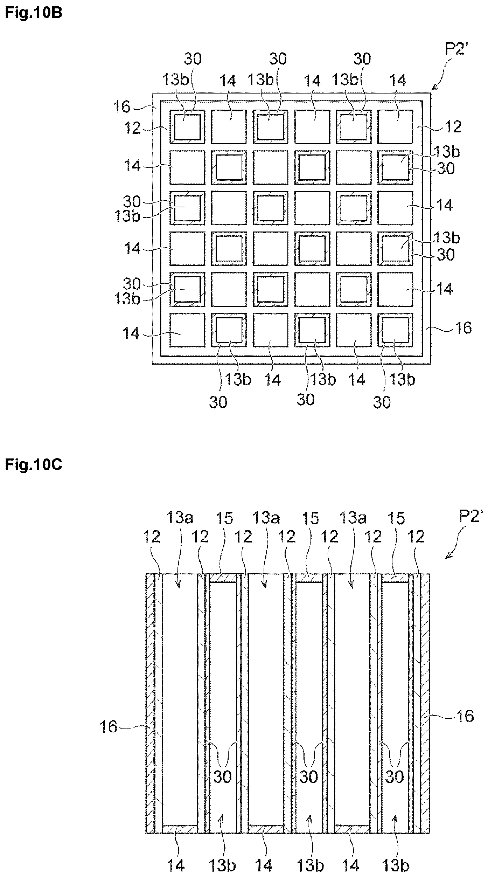

In the case where the cut piece P2 shown in Figures 9A and 9B is used, the first sealing member 14 for sealing the ends on the exhaust gas outflow side (the lower side of Figure 10C) of the inflow-side cells 13a included in the cut piece P2 and the second sealing member 15 for sealing the ends on the exhaust gas inflow side (the upper side of Figure 10C) of the outflow-side cells 13b included in the cut piece P2 are formed on the cut piece P2, and the third sealing member 16 is formed on the outermost periphery of the cut piece P2, to thereby obtain a cut piece P2', as shown in Figures 10A to 10C. The first sealing member 14, the second sealing member 15, and the third sealing member 16 can be formed by applying a sealing material to the respective predetermined sites of the cut piece P2. As the sealing material, an adhesive such as epoxy resin-based adhesive can be used, for example. The thicknesses of the first sealing member 14 and the second sealing member 15 are each equal to or less than one-tenth of the length of the cut piece P2' in the axis direction (the vertical direction in Figure 10C).

The method for determining Rb will be described below by way of an exemplary case of using the cut piece P2' shown in Figures 10A to 10C, for the sake of explanatory convenience. The description given below can be also applied to cases of using another cut piece P2'.

The cut piece P2' is set on a holder of a permporometer. A gas is allowed to flow through the cut piece P2' at 1 to 200 L/min while varying the gas pressure, and the gas flow rate under pressure is determined. The gas allowed to flow is air. As the permporometer, a permporometer manufactured by Porous Materials Inc. (e.g., CFP-1100A) can be used, for example. The gas is allowed to flow from the ends (openings) on the exhaust gas inflow side (the upper side of Figure 10C) of the inflow-side cells 13a included in the cut piece P2'. The gas flowing from the ends (opening) on the exhaust gas inflow side (the upper side of Figure 10C) of the inflow-side cells 13a passes through the partition wall 12 and the second catalyst layer 30, and flows out from the ends (openings) on the exhaust gas outflow side (the lower side of Figure 10C) of the outflow-side cells 13b.

From the following formula, the gas permeability is determined when the pressure difference between the location on the upstream side (the upper side of Figure 10C) and the location on the downstream side (the lower side of Figure 10C) in the gas flowing direction with respect to the cut piece P2' during gas flow ((the pressure at the location on the upstream side in the gas flowing direction with respect to the cut piece P2' during gas flow) - (the pressure at the location on the downstream side in the gas flowing direction with respect to the cut piece P2' during gas flow)) is 10 kPa. The pressure at the location on the upstream side in the gas flowing direction with respect to the cut piece P2' during gas flow is controlled by the permporometer. The downstream side in the gas flowing direction with respect to the cut piece P2' during gas flow is open to the atmosphere, and thus the pressure at the location on the downstream side in the gas flowing direction with respect to the cut piece P2' during gas flow is equal to the atmospheric pressure.

$$R = Q/A_2 M_2$$

wherein

$R$ represents the gas permeability (unit: $cm^3/(cm^2 \cdot s \cdot Pa)$),
$Q$ represents the gas flow rate (unit: $cm^3/s$) under pressure,
$A_2$ represents the effective filtration area (unit: $cm^2$) of the cut piece P2', and
$M_2$ represents the pressure difference (unit: Pa) between the location on the upstream side and the location on the downstream side in the gas flowing direction with respect to the cut piece P2' during gas flow.

$A_2$ can be determined from the following formula:

$$A_2 = \alpha_2 \times \beta_2 \times \gamma_2$$

wherein

$\alpha_2$ represents the average dimension (unit: cm) of one edge of the opening of the outflow-side cell 13b,
$\beta_2$ represents the length (unit: cm) of the cut piece P2' in the axis direction, and
$\gamma_2$ represents the number of the effective filtration faces of the cut piece P2'.

$\alpha_2$ can be determined from the following formula:

$$\alpha_2 = \text{Average distance D2} - \text{Average thickness T of partition wall 12}$$

The average distance D2 (unit: cm) can be determined by the following method.

Among four edges constituting the opening of a given outflow-side cell 13b in the plan view of the cut piece P2' shown in Figure 12, the left edge in Figure 12 is designated as "left edge A1b", the right edge in Figure 12 is designated as "right edge A2b", the top edge in Figure 12 is designated as "top edge A3b", and the bottom edge in Figure 12 is designated as "bottom edge A4b". Among four edges constituting the opening of an inflow-side cell 13a adjacent to the right side or the left side of the outflow-side cell 13b, the left edge in Figure 12 is designated as "left edge B1a", the right edge in Figure 12 is designated as "right edge B2a", the top edge in Figure 12 is designated as "top edge B3a", and the bottom edge in Figure 12 is designated as "bottom edge B4a". Among four edges constituting the opening of an inflow-side cell 13a adjacent to the lower side or the upper side of the outflow-side cell 13b, the left edge in Figure 12 is designated as "left edge C1a", the right edge in Figure 12 is designated as "right edge C2a", the top edge in Figure 12 is designated as "top edge C3a", and the bottom edge in Figure 12 is designated as "bottom edge C4a". The four edges constituting the opening of the outflow-side cell 13b described above are edges formed by the outer surface S1b of the partition wall 12 of the substrate 10 (see Figures 4 to 6) in the cut piece P2'. The four edges constituting the opening of the inflow-side cell 13a described above are edges formed by the outer surface S1a of the partition wall 12 of the substrate 10 (see Figures 4 to 6) in the cut piece P2'.

In the plan view of the cut piece P2' shown in Figure 12, measurement is made for the distance (unit: cm) between the left edge A1b of the opening of the outflow-side cell 13b and the left edge B1a of the opening of the inflow-side cell 13a, and the resulting distance is designated as a distance D21. Alternatively, measurement may be made for the distance (unit: cm) between the right edge A2b of the opening of the outflow-side cell 13b and the right edge B2a of the opening of the inflow-side cell 13a, and the resulting distance may be designated as the distance D21. The distance D21 can be considered as the total of the dimension of the top edge A3b or the bottom edge A4b of the opening of the outflow-side cell 13b and the thickness of the partition wall 12.

For each of twenty outflow-side cells 13b arbitrarily selected in the plan view of the cut piece P2' shown in Figure 12 and the respective inflow-side cells 13a adjacent thereto, the distance D21 is determined in the same manner as described above, and the average thereof is designated as an average distance D21'.

In the plan view of the cut piece P2' shown in Figure 12, measurement is made for the distance (unit: cm) between the bottom edge A4b of the opening of the outflow-side cell 13b and the bottom edge C4a of the opening of the inflow-side cell 13a, and the resulting distance is designated as a distance D22. Alternatively, measurement may be made for the distance (unit: cm) between the top edge A3b of the opening of the outflow-side cell 13b and the top edge C3a of the opening of the inflow-side cell 13a, and the resulting distance may be designated as the distance D22. The distance D22 can be considered as the total of the dimension of the left edge A1b or the right edge A2b of the opening of the outflow-side cell 13b and the thickness of the partition wall 12.

For each of twenty outflow-side cells 13b arbitrarily selected in the plan view of the cut piece P2' shown in Figure 12 and the respective inflow-side cells 13a adjacent thereto, the distance D22 is determined in the same manner as described above, and the average thereof is designated as an average distance D22'.

The average distance D2 can be determined as the average of the average distance D21' and the average distance D22' (i.e., D2 = (D21' + D22') / 2).

In the case where the average distance D21' is equal to the average distance D22', the average distance D21' or the average distance D22' can be considered as the average distance D2 (i.e., D2 = D21' or D2 = D22').

The average thickness T of the partition wall 12 (unit: cm) can be determined in the same manner as described above.

$\beta_2$ can be determined by measuring the length of the cut piece P2' in the axis direction.

$\gamma_2$ can be determined by the following method.

As shown in Figures 4 and 5, the outer surface S1a of the partition wall 12 in contact with a single inflow-side cell 13a is composed of four faces, and the outer surface S1b of the partition wall 12 in contact with a single outflow-side cell 13b is composed of four faces.

For all outflow-side cells 13b included in the cut piece P2', the number of faces is determined, the faces being not adjacent to the third sealing member 16 in the outer surface S1b (four faces) of the partition wall 12 in contact with each outflow-side cell 13b, and the total number thereof is defined as $\gamma_2$. The specific details are as follows.

In the plan view of the cut piece P2' shown in Figure 12, three inflow-side cells 13a and three outflow-side cells 13b are arranged in a single row in the horizontal direction in Figure 12. The rows are designated as "first row G1", "second row G2", "third row G3", "fourth row G4", "fifth row G5", and "sixth row G6", respectively, in order from the top side of Figure 12. The three outflow-side cells 13b in the first row G1 are designated as "outflow-side cell G11", "outflow-side cell G12", and "outflow-side cell G13", respectively, in order from the left side of Figure 12. The three outflow-side cells 13b in the second row G2 are designated as "outflow-side cell G21", "outflow-side cell G22", and "outflow-side cell G23", respectively, in order from the left side of Figure 12. The three outflow-side cells 13b in the third row G3 are designated as "outflow-side cell G31", "outflow-side cell G32", and "outflow-side cell G33", respectively, in order from the left side of Figure 12. The three outflow-side cells 13b in the fourth row G4 are designated as "outflow-side cell G41", "outflow-side cell G42", and "outflow-side cell G43", respectively, in order from the left side of Figure 12. The three outflow-side cells 13b in the fifth row G5 are designated as "outflow-side cell G51", "outflow-side cell G52", and "outflow-side cell G53", respectively, in order from the left side of Figure 12. The three outflow-side cells 13b in the sixth row G6 are designated as "outflow-side cell G61", "outflow-side cell G62", and "outflow-side cell G63", respectively, in order from the left side of Figure 12.

In the outer surface S1b (four faces) of the partition wall 12 in contact with the outflow-side cell G11, the left face (the face on the left side in Figure 12) and the top face (the face on the top side in Figure 12) are adjacent to the third sealing member 16. Accordingly, in the outer surface S1b (four faces) of the partition wall 12 in contact with the outflow-side cell G11, the number of faces that are not adjacent to the third sealing member 16 is two.

In the outer surface S1b (four faces) of the partition wall 12 in contact with the outflow-side cell G63, the right face (the face on the right side in Figure 12) and the bottom face (the face on the bottom side in Figure 12) are adjacent to the third sealing member 16. Accordingly, in the outer surface S1b (four faces) of the partition wall 12 in contact with the outflow-side cell G63, the number of faces that are not adjacent to the third sealing member 16 is two.

In the outer surface S1b (four faces) of the partition wall 12 in contact with the outflow-side cell G12 or G13, the top face (the face on the top side in Figure 12) is adjacent to the third sealing member 16. Accordingly, in the outer surface S1b (four faces) of the partition wall 12 in contact with the outflow-side cell G12 or G13, the number of faces that are not adjacent to the third sealing member 16 is three.

In the outer surface S1b (four faces) of the partition wall 12 in contact with the outflow-side cell G23 or G43, the right face (the face on the right side in Figure 12) is adjacent to the third sealing member 16. Accordingly, in the outer surface S1b (four faces) of the partition wall 12 in contact with the outflow-side cell G23 or G43, the number of faces that are not adjacent to the third sealing member 16 is three.

In the outer surface S1b (four faces) of the partition wall 12 in contact with the outflow-side cell G31 or G51, the left face (the face on the left side in Figure 12) is adjacent to the third sealing member 16. Accordingly, in the outer surface S1b (four faces) of the partition wall 12 in contact with the outflow-side cell G31 or G51, the number of faces that are not adjacent to the third sealing member 16 is three.

In the outer surface S1b (four faces) of the partition wall 12 in contact with the outflow-side cell G61 or G62, the bottom face (the face on the bottom side in Figure 12) is adjacent to the third sealing member 16. Accordingly, in the outer surface S1b (four faces) of the partition wall 12 in contact with the outflow-side cell G61 or G62, the number of faces that are not adjacent to the third sealing member 16 is three.

In the outer surface S1b (four faces) of the partition wall 12 in contact with the outflow-side cell G21, G22, G32, G33, G41, G42, G52, or G53, no face is adjacent to the third sealing member 16. Accordingly, in the outer surface S1b (four faces) of the partition wall 12 in contact with the outflow-side cell G21, G22, G32, G33, G41, G42, G52, or G53, the number of faces that are not adjacent to the third sealing member 16 is four.

From the above, the number of the effective filtration faces in the cut piece P2' is $2 \times 2$ (outflow-side cells G11 and G63) + $3 \times 8$ (outflow-side cells G12, G13, G23, G31, G43, G51, G61, and G62) + $4 \times 8$ (outflow-side cells G21, G22, G32, G33, G41, G42, G52, and G53) = 60.

For three cut pieces P2', the respective gas permeabilities are determined, and the average thereof is defined as the gas permeability Rb ($cm^3/(cm^2 \cdot s \cdot Pa)$) of the second catalyst layer 30 and the partition wall 12.

In the determination method described above, non-through pores are not subjected to determination, and only through pores in the second catalyst layer 30 and the partition wall 12 are subjected to determination. Accordingly, by the determination method described above, the gas permeability of the second catalyst layer 30 and the partition wall 12 can be accurately determined.

Rb ($cm^3/(cm^2 \cdot s \cdot Pa)$) satisfies the formula 1b. That is, Rb is $1.30 \times 10^{-3}$ ($cm^3/(cm^2 \cdot s \cdot Pa)$) or more. Rb is an index representing the exhaust gas permeability of the second catalyst layer 30 and the partition wall 12. As Rb increases, the exhaust gas permeability of the second catalyst layer 30 and the partition wall 12 becomes greater. When Rb is $1.30 \times 10^{-3}$ ($cm^3/(cm^2 \cdot s \cdot Pa)$) or more, the exhaust gas permeability of the second catalyst layer 30 and the partition wall 12 is sufficient, and this contributes to achieving both improvement of PM collection performance and suppression of pressure loss increase.

In view of more effectively achieving both improvement of PM collection performance and suppression of pressure loss increase, Rb is preferably $1.50 \times 10^{-3}$ ($cm^3/(cm^2 \cdot s \cdot Pa)$) or more, more preferably $1.70 \times 10^{-3}$ ($cm^3/(cm^2 \cdot s \cdot Pa)$) or more, still more preferably $1.90 \times 10^{-3}$ ($cm^3/(cm^2 \cdot s \cdot Pa)$) or more.

If Rb is too large, exhaust gas may pass through the second catalyst layer 30 and the partition wall 12 without sufficiently diffusing inside the second catalyst layer 30 and the partition wall 12. In view of improving the ease of exhaust gas to diffuse inside the second catalyst layer 30 and the partition wall 12 to improve both exhaust gas purification performance and PM collection performance, Rb is preferably $2.00 \times 10^{-2}$ ($cm^3/(cm^2 \cdot s \cdot Pa)$) or less, more preferably $1.90 \times 10^{-2}$ ($cm^3/(cm^2 \cdot s \cdot Pa)$) or less, still more preferably $1.80 \times 10^{-2}$ ($cm^3/(cm^2 \cdot s \cdot Pa)$) or less. Each of these upper limits can be combined with any of the lower limits described above.

The gas permeability of the partition wall 12 alone as determined using a permporometer is designated as Rc ($cm^3/(cm^2 \cdot s \cdot Pa)$). Rc is generally $1.00 \times 10^{-2}$ ($cm^3/(cm^2 \cdot s \cdot Pa)$) or more and $2.30 \times 10^{-2}$ ($cm^3/(cm^2 \cdot s \cdot Pa)$) or less. Rc may be $1.15 \times 10^{-2}$ ($cm^3/(cm^2 \cdot s \cdot Pa)$) or more and $2.15 \times 10^{-2}$ ($cm^3/(cm^2 \cdot s \cdot Pa)$) or less, or may be $1.30 \times 10^{-2}$ ($cm^3/(cm^2 \cdot s \cdot Pa)$) or more and $2.00 \times 10^{-2}$ ($cm^3/(cm^2 \cdot s \cdot Pa)$) or less.

The method for determining Rc will be described below.

A sample extending in the axial direction of the substrate 10 and having the same length as the length $L_{10}$ of the substrate 10 is cut out from the catalyst 1. The number of the inflow-side cells 13a included in the sample is the same as the number of the outflow-side cells 13b included in the sample. The plan view shape of the sample when the sample is planarly viewed from the axis direction of the sample is, for example, quadrangular (preferably square or rectangular, more preferably square). The size of the plan view shape when the sample is planarly viewed from the axis direction is not particularly limited as long as the number of the inflow-side cells 13a included in the sample is the same as the number of the outflow-side cells 13b included in the sample. For example, the dimension in the vertical direction is 10 mm, and the dimension in the horizontal direction is 10 mm. In the case where the inflow-side cells 13a and the outflow-side cells 13b are arranged alternately in both the vertical direction and the horizontal direction, and the total number of the inflow-side cells 13a and the outflow-side cells 13b arranged in the vertical direction of the sample and the total number of the inflow-side cells 13a and the outflow-side cells 13b arranged in the horizontal direction of the sample are each an even integer, the number of the inflow-side cells 13a included in the sample is the same as the number of the outflow-side cells 13b included in the sample.

The sample is cut along a plane perpendicular to the axis direction of the sample to obtain a cut piece P3, which includes neither part of the first catalyst layer 20 nor part of the second catalyst layer 30. The length of the cut piece P3 in the axis direction is not particularly limited, and is 10 mm, for example. The cut piece P3 includes neither the first sealing member 14 nor the second sealing member 15.

An example of the cut piece P3 is the same as the example of the cut piece P1 shown in Figures 7A and 7B, except that the cut piece P3 does not include part of the first catalyst layer 20. The cut piece P3 is in the form of, for example, a cube having a dimension of 10 mm in the vertical direction, a dimension of 10 mm in the horizontal direction, and a dimension of 10 mm in the axis direction.

A first sealing member for sealing the ends on the exhaust gas outflow side of the inflow-side cells 13a included in the cut piece P3 and a second sealing member for sealing the ends on the exhaust gas inflow side of the outflow-side cells 13b included in the cut piece P3 are formed on the cut piece P3, and a third sealing member is formed on the outermost periphery of the cut piece P3, to thereby obtain a cut piece P3'. The first sealing member, the second sealing member, and the third sealing member can be formed by applying a sealing material to the respective predetermined sites of the cut piece P3. As the sealing material, an adhesive such as epoxy resin-based adhesive can be used, for example. The thicknesses of the first sealing member 14 and the second sealing member 15 are each equal to or less than one-tenth of the length of the cut piece P3 in the axis direction.

An example of the cut piece P3' is the same as the example of the cut piece P1' shown in Figures 8A to 8C, except that the cut piece P3' does not include part of the first catalyst layer 20.

Rc can be determined in the same manner as described above, except that the cut piece P3' is used instead of the cut piece P1'.

< 50% flow pore diameter and 10% flow pore diameter >

Hereinafter, description will be made about Xa ($\mu$m) and Ya ($\mu$m), that is, the 50% flow pore diameter of the first catalyst layer 20 and the partition wall 12 and the 10% flow pore diameter of the first catalyst layer 20 and the partition wall 12. The term "partition wall 12" in the expressions "the 50% flow pore diameter of the first catalyst layer 20 and the partition wall 12" and "the 10% flow pore diameter of the first catalyst layer 20 and the partition wall 12" refers to the portion of the partition wall 12 where the first catalyst layer 20 is provided.

The method for determining Xa and Ya will be described below.

A cut piece P1' (for example, the cut piece P1' shown in Figures 8A to 8C) is prepared in the same manner as described above. The cut piece P1' is set on a holder of a permporometer. A gas is allowed to flow through the cut piece P1' at 1 to 200 L/min while varying the gas pressure, and the gas flow rate under pressure is determined (hereinafter referred to as "first determination"). The gas allowed to flow is air. As the permporometer, a permporometer manufactured by Porous Materials Inc. (e.g., CFP-1100A) can be used, for example. The gas is allowed to flow from the ends (openings) on the exhaust gas inflow side (the upper side of Figure 8C) of the inflow-side cells 13a included in the cut piece P1'. The gas flowing from the ends (openings) on the exhaust gas inflow side (the upper side of Figure 8C) of the inflow-side cells 13a passes through the first catalyst layer 20 and the partition wall 12, and flows out from the ends (openings) on the exhaust gas outflow side (the lower side of Figure 8C) of the outflow-side cells 13b.

The first determination is carried out on the cut piece P1' in a dry state (specifically, the cut piece P1' that has not yet been impregnated with a non-volatile reagent (Galwick reagent, manufactured by Porous Materials Inc.)). By the first determination, a pressure-flow rate curve is obtained for the cut piece P1' in a dry state.

A cut piece P1' is prepared in the same manner as described above. The cut piece P1' is impregnated with a non-volatile reagent (Galwick reagent, manufactured by Porous Materials Inc.), followed by vacuum deaeration to remove air from the cut piece P1'. Then, the cut piece P1' impregnated with the reagent is set on a holder of a permporometer. A gas is allowed to flow through the cut piece P1' at 1 to 200 L/min while varying the gas pressure, and the gas flow rate under pressure is determined (hereinafter referred to as "second determination"). The gas allowed to flow is air. The surface tension of the Galwick reagent, manufactured by Porous Materials Inc., is 15.9 dyne/cm. As the permporometer, a permporometer manufactured by Porous Materials Inc. (e.g., CFP-1100A) can be used, for example. The gas is allowed to flow from the ends (openings) on the exhaust gas inflow side (the upper side of Figure 8C) of the inflow-side cells 13a included in the cut piece P1'. The gas flowing from the ends (openings) on the exhaust gas inflow side (the upper side of Figure 8C) of the inflow-side cells 13a passes through the first catalyst layer 20 and the partition wall 12, and flows out from the ends (openings) on the exhaust gas outflow side (the lower side of Figure 8C) of the outflow-side cells 13b.

The second determination is carried out on the cut piece P1' wet with the reagent. By the second determination, a pressure-flow rate curve is obtained for the cut piece P1' in a wet state with the reagent.

In the second determination, all through-pores in the cut piece P1' are filled with the reagent at the beginning of the determination, and with increase in the gas pressure, the reagent that has filled in the through-pores is pushed out so that gas is allowed to permeate.

In the first and second determinations, the measurement software "Capwin" (manufactured by Porous Materials Inc.) is used. The detailed conditions for the first determination are specified as "dry parameters", and the detailed conditions for the second determination are specified as "wet parameters", as described below.

<< Dry parameters / Wet parameters >>

< Bubble point test/ Integrity test >

- bublflow 15.00 (cc/m)
- F/PT 200 (old bobltime)

< Motor valve control >

- v2incr 2 (cts*3)

< Regulator control >

- preginc 0.5 (cts*50)
- pulse delay 2 (sec)

< Data finalizing routine >

- mineqtime 15 (sec)
- presslew 50 (cts*3)
- flowslew 50 (cts*3)
- eqiter 30 (0.1 sec)
- aveiter 20 (0.1 sec)
- maxpdif 0.10 (PSI)
- maxfdif 30.0 (cc/m)

By the determination method described above, the diameter of the narrowest portion of a through-pore (hereinafter referred to as "through-pore diameter") can be determined. For example, in the case where a through-pore has a shape with a constriction in the middle, like an hourglass tube, the through-pore diameter refers to the diameter in the constricted portion of the through-pore.

The relationship between the gas pressure and the through-pore diameter is expressed by the following formula. The constant C is 2860.

$$D = C \times \gamma / \Delta P$$

wherein D represents the through-pore diameter (unit: $\mu$m), $\gamma$ represents the surface tension of the reagent (unit: dyne/cm), C represents the constant, and $\Delta$P represents the difference in pressure (unit: Pa) between the location on the upstream side (the upper side of Figure 8C) and the location on the downstream side (the lower side of Figure 8C) in the gas flowing direction with respect to the cut piece P1' during gas flow ((the pressure at the location on the upstream side in the gas flowing direction with respect to the cut piece P1' during gas flow) - (the pressure at the location on the downstream side in the gas flowing direction with respect to the cut piece P1' during gas flow)).

The gas flow late (L/min) under a given gas pressure is determined from the pressure-flow rate curve obtained in the first determination, which is designated as "Dry flow rate". The gas flow late (L/min) under the same gas pressure is determined from the pressure-flow rate curve obtained in the second determination, which is designated as "Wet flow rate".

For the cut piece P1', the through-pore diameter at which the percentage of the Wet flow rate to the Dry flow rate (Wet flow rate/ Dry flow rate $\times$ 100) reaches 50%, and the through-pore diameter at which the percentage of the Wet flow rate to the Dry flow rate (Wet flow rate/ Dry flow rate $\times$ 100) reaches 10% are determined. In the second determination, as the gas pressure is gradually increased, the liquid films rupture sequentially starting from the larger pores, resulting in an increase in gas flow rate. Accordingly, the through-pore diameter ($\mu$m) at which the percentage reaches 10% is larger than the through-pore diameter ($\mu$m) at which the percentage reaches 50%.

For each of three cut pieces P1', the through-pore diameter ($\mu$m) at which the percentage reaches 50% is determined, and the average thereof is defined as Xa ($\mu$m), that is, the 50% flow pore diameter of the first catalyst layer 20 and the partition wall 12.

For each of three cut pieces P1', the through-pore diameter ($\mu$m) at which the percentage reaches 10% is determined, and the average thereof is defined as Ya ($\mu$m), that is, the 10% flow pore diameter of the first catalyst layer 20 and the partition wall 12.

Xa ($\mu$m) and Ya ($\mu$m) satisfy the formula 2a. That is, the value of Xa $\times$ Ya is 8.00 $\mu$m$^2$ or less. The through-pore diameters in the first catalyst layer 20 and the partition wall 12 have a distribution. Xa ($\mu$m) is an index representing the median of the through-pore diameter distribution, and Ya ($\mu$m) is an index representing the larger end of the through-pore diameter distribution. The balance between Xa ($\mu$m) and Ya ($\mu$m) is important for achieving both improvement of PM collection performance and suppression of pressure loss increase. When the value of Xa × Ya is 8.00 $\mu$m$^2$ or less, the balance between Xa ($\mu$m) and Ya ($\mu$m) is secured, and this contributes to achieving both improvement of PM collection performance and suppression of pressure loss increase.

The fact that the value of Xa × Ya is 8.00 $\mu$m$^2$ or less means that Ya ($\mu$m) is needed to be small when Xa ($\mu$m) is large, and that Ya ($\mu$m) may be large when Xa ($\mu$m) is small. In the second determination, as the gas pressure is gradually increased, the liquid films rupture sequentially starting from the larger pores, resulting in an increase in gas flow rate. Accordingly, Ya ($\mu$m) is larger than Xa ($\mu$m). Thus, when the value of Xa × Ya is 8.00 $\mu$m$^2$ or less, the larger Xa is (i.e., the smaller Ya is), the closer Xa and Ya are to each other. For achieving both improvement of PM collection performance and suppression of pressure loss increase, it is preferable that Xa is larger (i.e., Ya is smaller), and thus that Xa and Ya is closer to each other.

In view of more effectively achieving both improvement of PM collection performance and suppression of pressure loss increase, the value of Xa × Ya is preferably 7.80 $\mu$m$^2$ or less, more preferably 7.50 $\mu$m$^2$ or less, still more preferably 7.00 $\mu$m$^2$ or less.

In view of more effectively achieving both improvement of PM collection performance and suppression of pressure loss increase, the catalyst 1 preferably satisfies one or more of the following formulae 3a, 4a, and 5a, in addition to the formulae 1a and 2a.

In view of more effectively achieving both improvement of PM collection performance and suppression of pressure loss increase, the catalyst 1 preferably satisfies the following formula 3a:

$$2.00 \leq Xa \times Ya \quad ... (3a)$$

That is, the value of Xa × Ya is preferably 2.00 $\mu$m$^2$ or more. The value of Xa × Ya is more preferably 2.30 $\mu$m$^2$ or more, still more preferably 2.50 $\mu$m$^2$ or more.

In view of more effectively achieving both improvement of PM collection performance and suppression of pressure loss increase, the catalyst 1 preferably satisfies the following formula 4a:

$$0.60 \leq Xa \quad ... (4a)$$

That is, Xa is preferably 0.60 $\mu$m or more. Xa is more preferably 0.80 $\mu$m or more, still more preferably 1.00 $\mu$m or more.

In view of more effectively achieving both improvement of PM collection performance and suppression of pressure loss increase, Xa is preferably 2.80 $\mu$m or less, more preferably 2.60 $\mu$m or less, still more preferably 2.40 $\mu$m or less. Each of these upper limits can be combined with any of the lower limits described above.

In view of more effectively achieving both improvement of PM collection performance and suppression of pressure loss increase, the catalyst 1 preferably satisfies the following formula 5a:

$$Ya \leq 5.00 \quad ... (5a)$$

That is, Ya is preferably 5.00 $\mu$m or less. The value of Ya is more preferably 4.50 $\mu$m or less, still more preferably 4.00 $\mu$m or less.

In view of more effectively achieving both improvement of PM collection performance and suppression of pressure loss increase, Ya is preferably 1.50 $\mu$m or more, more preferably 1.80 $\mu$m or more, still more preferably 2.00 $\mu$m or more. Each of these lower limits can be combined with any of the upper limits described above.

Hereinafter, Xb ($\mu$m) and Yb ($\mu$m), that is, the 50% flow pore diameter of the second catalyst layer 30 and the partition wall 12, and the 10% flow pore diameter of the second catalyst layer 30 and the partition wall 12 will be described. The term "partition wall 12" in the expressions "the 50% flow pore diameter of the second catalyst layer 30 and the partition wall 12" and "the 10% flow pore diameter of the second catalyst layer 30 and the partition wall 12" refers to the portion of the partition wall 12 where the second catalyst layer 30 is provided.

The method for determining Xb and Yb is the same as the method for determining Xa and Ya, except for using a cut piece P2' (for example, the cut piece P2' shown in Figures 10A to 10C) instead of the cut piece P1'. In the first and second determinations, the gas is allowed to flow from the ends (openings) on the exhaust gas inflow side (the upper side of Figure 10C) of the inflow-side cells 13a included in the cut piece P2'. The gas flowing from the ends (openings) on the exhaust gas inflow side (the upper side of Figure 10C) of the inflow-side cells 13a passes through the partition wall 12 and the second catalyst layer 30, and flows out from the ends (openings) on the exhaust gas outflow side (the lower side of Figure 10C) of the outflow-side cells 13b.

For the cut piece P2', the through-pore diameter at which the percentage of the Wet flow rate to the Dry flow rate (Wet flow rate/ Dry flow rate × 100) reaches 50%, and the through-pore diameter at which the percentage of the Wet flow rate to the Dry flow rate (Wet flow rate/ Dry flow rate × 100) reaches 10% are determined. In the second determination, as the gas pressure is gradually increased, the liquid films rupture sequentially starting from the larger pores, resulting in an increase in gas flow rate. Accordingly, the through-pore diameter ($\mu$m) at which the percentage reaches 10% is larger than the through-pore diameter ($\mu$m) at which the percentage reaches 50%.

For each of three cut pieces P2', the through-pore diameter ($\mu$m) at which the percentage reaches 50% is determined, and the average thereof is defined as Xb ($\mu$m), that is, the 50% flow pore diameter of the second catalyst layer 30 and the partition wall 12.

For each of three cut pieces P2', the through-pore diameter ($\mu$m) at which the percentage reaches 10% is determined, and the average thereof is defined as Yb ($\mu$m), that is, the 10% flow pore diameter of the second catalyst layer 30 and the partition wall 12.

Xb ($\mu$m) and Yb ($\mu$m) satisfy the formula 2b. That is, the value of Xb × Yb is 8.00 $\mu$m$^2$ or less. The through-pore diameters in the second catalyst layer 30 and the partition wall 12 have a distribution. Xb ($\mu$m) is an index representing the median of the through-pore diameter distribution, and Yb ($\mu$m) is an index representing the larger end of the through-pore diameter distribution. The balance between Xb ($\mu$m) and Yb ($\mu$m) is important for achieving both improvement of PM collection performance and suppression of pressure loss increase. When the value of Xb × Yb is 8.00 $\mu$m$^2$ or less, the balance between Xb ($\mu$m) and Yb ($\mu$m) is secured, and this contributes to achieving both improvement of PM collection performance and suppression of pressure loss increase.

The fact that the value of Xb × Yb is 8.00 $\mu$m$^2$ or less means that Yb ($\mu$m) is needed to be small when Xb ($\mu$m) is large, and that Yb ($\mu$m) may be large when Xb ($\mu$m) is small. In the second determination, as the gas pressure is gradually increased, the liquid films rupture sequentially starting from the larger pores, resulting in an increase in gas flow rate. Accordingly, Yb ($\mu$m) is larger than Xb ($\mu$m). Thus, when the value of Xb × Yb is 8.00 $\mu$m$^2$ or less, the larger Xb is (i.e., the smaller Yb is), the closer Xb and Yb are to each other. For achieving both improvement of PM collection performance and suppression of pressure loss increase, it is preferable that Xb is larger (i.e., Yb is smaller), and thus that Xb and Yb is closer to each other.

In view of more effectively achieving both improvement of PM collection performance and suppression of pressure loss increase, the value of Xb × Yb is preferably 7.80 $\mu$m$^2$ or less, more preferably 7.50 $\mu$m$^2$ or less, still more preferably 7.00 $\mu$m$^2$ or less.

In view of more effectively achieving both improvement of PM collection performance and suppression of pressure loss increase, the catalyst 1 preferably satisfies one or more of the following formulae 3b, 4b, and 5b, in addition to the formulae 1b and 2b.

In view of more effectively achieving both improvement of PM collection performance and suppression of pressure loss increase, the catalyst 1 preferably satisfies the following formula 3b:

$$2.00 \leq Xb \times Yb \quad ... (3b)$$

That is, the value of Xb × Yb is preferably 2.00 $\mu$m$^2$ or more. The value of Xb × Yb is more preferably 2.30 $\mu$m$^2$ or more, still more preferably 2.50 $\mu$m$^2$ or more.

In view of more effectively achieving both improvement of PM collection performance and suppression of pressure loss increase, the catalyst 1 preferably satisfies the following formula 4b:

$$0.60 \leq Xb \quad ... (4b)$$

That is, Xb is preferably 0.60 $\mu$m or more. Xb is more preferably 0.80 $\mu$m or more, still more preferably 1.00 $\mu$m or more.

In view of more effectively achieving both improvement of PM collection performance and suppression of pressure loss increase, Xb is preferably 2.80 $\mu$m or less, more preferably 2.60 $\mu$m or less, still more preferably 2.40 $\mu$m or less. Each of these upper limits can be combined with any of the lower limits described above.

In view of more effectively achieving both improvement of PM collection performance and suppression of pressure loss increase, the catalyst 1 preferably satisfies the following formula 5b:

$$Yb \leq 5.00 \quad ... (5b)$$

That is, Yb is preferably 5.00 $\mu$m or less. Yb is more preferably 4.50 $\mu$m or less, still more preferably 4.00 $\mu$m or less.

In view of more effectively achieving both improvement of PM collection performance and suppression of pressure loss increase, Yb is preferably 1.50 $\mu$m or more, more preferably 1.80 $\mu$m or more, still more preferably 2.00 $\mu$m or more. Any of these lower limits can be combined with any of the upper limits described above.

The 50% flow pore diameter and the 10% flow pore diameter of the partition wall 12 alone, as determined by a bubble point method using a permporometer, are designated as Xc ($\mu$m) and Yc ($\mu$m), respectively. The value of Xc $\times$ Yc is typically 50 $\mu$m$^2$ or more and 300 $\mu$m$^2$ or less. The value of Xc $\times$ Yc may be 80 $\mu$m$^2$ or more and 250 $\mu$m$^2$ or less, or may be 100 $\mu$m$^2$ or more and 200 $\mu$m$^2$ or less. The value of Xc is typically 8 $\mu$m or more and 15 $\mu$m or less. The value of Xc may be 9 $\mu$m or more and 14 $\mu$m or less, or may be 10 $\mu$m or more and 13 $\mu$m or less. The value of Yc is typically 9 $\mu$m or more and 20 $\mu$m or less. The value of Yc may be 10 $\mu$m or more and 18 $\mu$m or less, or may be 11 $\mu$m or more and 15 $\mu$m or less.

Xc and Yc can be determined in the same manner as described above except for using a cut piece P3' instead of the cut piece P1'. The cut piece P3' can be prepared in the same manner as described above. In the case where the catalyst 1 includes a portion that includes neither part of the first catalyst layer 20 nor part of the second catalyst layer 30, the cut piece P3' may be prepared from the catalyst 1. In the case where the catalyst 1 does not include a portion that includes neither part of the first catalyst layer 20 nor part of the second catalyst layer 30, a substrate that is the same as used as the substrate 10 for the catalyst 1 is prepared, and determination results on the substrate prepared may be estimated as the value to be found on the catalyst 1.

< Composition of catalyst layer >

Hereinafter, the composition of the catalyst layer will be described. Unless otherwise specified, the following description with respect to the composition of the catalyst layer is applied to both the first catalyst layer 20 and the second catalyst layer 30. Further, unless otherwise specified, the following description with respect to the composition of the catalyst layer is also applied to the first catalyst layer 20 satisfying formulae 1a and 2a, the first catalyst layer 20 not satisfying at least one of formulae 1a and 2a, the second catalyst layer 30 satisfying formulae 1b and 2b, and the second catalyst layer 30 not satisfying at least one of formulae 1b and 2b. When applied to the first catalyst layer 20, the "catalyst layer" is replaced with the "first catalyst layer 20". When applied to the second catalyst layer 30, the "catalyst layer" is replaced with the "second catalyst layer 30".

< Noble metal element >

The catalyst layer contains one or more noble metal elements.

The noble metal element can be selected from, for example, Au, Ag, Pt, Pd, Rh, Ru, Ir, Os, and the like. From the viewpoint of improving exhaust gas purification performance, the noble metal element is preferably selected from Pt, Pd and Rh. The noble metal element contained in the catalyst layer is in the form capable of functioning as a catalytically-active component, for example, in the form of a catalytically-active component containing the noble metal element, such as metal, an alloy containing the noble metal element, a compound containing the noble metal element (e.g., an oxide of the noble metal element), or the like. From the viewpoint of improving exhaust gas purification performance, the catalytically-active component containing the noble metal element is preferably in particulate form.

From the viewpoint of balancing exhaust gas purification performance and cost, the content of the noble metal element in terms of metal in the catalyst layer is preferably 0.010% by mass or more and 20% by mass or less, more preferably 0.050% by mass or more and 10% by mass or less, and still more preferably 0.10% by mass or more and 5.0% by mass or less, based on the mass of the catalyst layer. The expression "the content of the noble metal element in terms of metal in the catalyst layer" refers to, in the case where the catalyst layer contains a single noble metal element, the content of the single noble metal element in terms of metal, and in the case where the catalyst layer contains multiple noble metal elements, the total content of the multiple noble metal elements in terms of metal. The above description with respect to the mass of the first catalyst layer 20 is also applied to the expression "the mass of the catalyst layer".

In the case where the composition of raw materials used to form the catalyst layer is known, the content of each metal element in terms of metal or oxide in the catalyst layer can be determined from the composition of the raw materials.

In the case where the composition of raw materials used to form the catalyst layer is not known, the content of each metal element in terms of metal or oxide in the catalyst layer can be determined by a conventional method such as scanning electron microscopy-energy dispersive X-ray spectroscopy (SEM-EDX). A specific example is as described below.

Elemental analysis using a conventional method such as SEM-EDX is performed on a sample obtained from the catalyst layer to identify the types of constituent elements of the entire sample, and to determine the mole percentage of each of the metal elements identified. From each of 10 fields of view in SEM, the mole percentage of each metal element is determined. The average mole percentage of each metal element in the 10 fields of view is defined as the mole percentage of each metal element in the catalyst layer. From the mole percentage of each metal element in the catalyst layer, the mass percentage of each noble metal element in terms of metal in the catalyst layer, and the mass percentage of each metal element other than noble metal elements in terms of oxide in the catalyst layer are determined. The mass percentage of each noble metal element in terms of metal in the catalyst layer is determined based on the formula: (Mass of each noble metal element in terms of metal, determined from mole percentage) / ((Total mass of noble metal elements in terms of metal, determined from mole percentages) + (Total mass of metal elements other than noble metal elements in terms of oxide, determined from mole percentages)) $\times$ 100. The mass percentage of each metal element other than noble metal elements in terms of oxide in the catalyst layer is determined based on the formula: (Mass of each metal element other than noble metal elements in terms of oxide, determined from mole percentage) / ((Total mass of noble metal elements in terms of metal, determined from mole percentages) + (Total mass of metal elements other than noble metal elements in terms of oxide, determined from mole percentages)) $\times$ 100.

< Carrier >

It is preferable that the catalyst layer contains one or more carriers, and that at least part of the catalytically-active component is supported on the one or more carriers.

The expression "at least part of the catalytically-active component is supported on the carrier" refers to a state in which at least part of the catalytically-active component is physically and/or chemically adsorbed and/or retained on the outer surface of the carrier and/or on the internal surface of pores of the carrier. It can be confirmed whether at least part of the catalytically-active component is supported on the carrier by using, for example, SEM-EDX or the like. Specifically, when at least part of the catalytically-active component and the carrier are present in the same region in an element mapping obtained by analyzing a cross section of the catalyst layer by SEM-EDX, it can be determined that at least part of the catalytically-active component is supported on the carrier.

The carrier can be selected from, for example, an inorganic oxide. The inorganic oxide is, for example, in particulate form. From the viewpoint of improving supportability for the catalytically-active component, the inorganic oxide is preferably porous. The inorganic oxide may have oxygen storage capacity (OSC), or may not have oxygen storage capacity. The inorganic oxide used as the carrier is distinct from an inorganic oxide used as a binder (e.g., an inorganic oxide binder such as an alumina binder, a zirconia binder, a titania binder, a silica binder, or the like).

Examples of the inorganic oxide include an Al-based oxide, a Ce-based oxide, a Ce-Zr-based complex oxide, an oxide of a rare earth element other than Ce, zirconia ($ZrO_2$), silica ($SiO_2$), titania ($TiO_2$), zeolite (aluminosilicate), an oxide based on MgO, ZnO or $SnO_2$, and the like.

The carrier is preferably selected from the Al-based oxide, the Ce-based oxide, and the Ce-Zr-based complex oxide. The catalyst layer may contain one or more carriers other than the Al-based oxide, the Ce-based oxide, and the Ce-Zr-based complex oxide.

An oxide containing Ce and Zr falls into the category of the Ce-based oxide in the case where the content of Ce in terms of $CeO_2$ is equal to or greater than the content of Zr in terms of $ZrO_2$, and falls into the category of the Ce-Zr-based oxide in the case where the content of Ce in terms of $CeO_2$ is less than the content of Zr in terms of $ZrO_2$. An oxide containing Ce and Al falls into the category of the Ce-based oxide in the case where the content of Ce in terms of $CeO_2$ is equal to or greater than the content of Al in terms of $Al_2O_3$, and falls into the category of the Al-based oxide in the case where the content of Ce in terms of $CeO_2$ is less than the content of Al in terms of $Al_2O_3$.

< Al-based oxide >

The term "Al-based oxide" refers to an oxide containing Al.

The Al-based oxide is, for example, in particulate form. The Al-based oxide is used as a carrier for a catalytically-active component. From the viewpoint of improving supportability for the catalytically-active component, the Al-based oxide is preferably porous. The Al-based oxide is distinct from alumina used as a binder, i.e., an alumina binder.

The Al-based oxide generally has higher heat resistance than other inorganic oxides (e.g., a Ce-based oxide, a Ce-Zr-based complex oxide, and the like). Accordingly, when the catalyst layer contains the Al-based oxide, the heat resistance of the catalyst layer is improved, and thereby the exhaust gas purification performance of the catalyst layer is improved.

The Al-based oxide may be composed of Al and O, or may contain one or more elements other than Al and O (hereinafter referred to as "other element(s)"). The other element(s) can be selected from, for example, B, Si, Zr, Cr, rare earth elements (e.g., Y, Ce, La, Nd, Pr, Sm, Gd, and the like), alkaline earth metal elements (e.g., Mg, Ca, Sr, Ba, and the like), and the like. From the viewpoint of improving the heat resistance of the Al-based oxide, the other element(s) is/are preferably selected from Ce, La, Sr, Ba, and the like. The other element(s) may form a solid solution phase together with Al and O, may form a single phase (e.g., an oxide phase(s) of the other element(s)) that is a crystalline phase or an amorphous phase, or may form both the solid solution phase and the single phase.

Examples of the Al-based oxide include alumina ($Al_2O_3$), an oxide obtained by modifying the surface of alumina with the other element(s), an oxide obtained by dissolving the other element(s) in alumina, and the like. Examples of the Al-based oxide containing the other element(s) include alumina-silica, alumina-zirconia, alumina-chromia, alumina-ceria, alumina-lanthana, and the like.

From the viewpoint of improving heat resistance, the content of Al in terms of $Al_2O_3$ in the Al-based oxide is preferably 70% by mass or more, more preferably 80% by mass or more, and still more preferably 90% by mass or more, based on the mass of the Al-based oxide. The upper limit is 100% by mass.

In the case where the composition of the Al-based oxide is known, the content of Al in terms of $Al_2O_3$ in the Al-based oxide can be determined from the composition of the Al-based oxide.

In the case where the composition of the Al-based oxide is not known, the content of Al in terms of $Al_2O_3$ in the Al-based oxide can be determined by analyzing a sample obtained from the catalyst layer by energy dispersive X-ray spectroscopy (EDX) to obtain an element mapping, and performing EDX elemental analysis on a designated particle in the obtained element mapping. Specifically, the content of the target element in terms of oxide in the designated particle can be determined by qualitatively identifying (color-coding) an Al-based oxide particle and other oxide particle(s) (e.g., a Ce-based oxide particle, a Ce-Zr-based complex oxide particle, and the like) by elemental mapping and performing composition analysis (elemental analysis) on the designated particle.

In the case where the catalyst layer contains the Al-based oxide, from the viewpoint of improving exhaust gas purification performance, the content of the Al-based oxide in the catalyst layer is preferably 5% by mass or more and 95% by mass or less, more preferably 5% by mass or more and 90% by mass or less, still more preferably 7% by mass or more and 90% by mass or less, and still more preferably 10% by mass or more and 85% by mass or less, based on the mass of the catalyst layer.

In the case where the composition of raw materials used to form the catalyst layer is known, the content of the Al-based oxide in the catalyst layer can be determined based on the composition of the raw materials.

In the case where the composition of raw materials used to form the catalyst layer is not known, the content of the Al-based oxide in the catalyst layer can be determined by a conventional method such as SEM-EDX. A specific example is as described below.

(A) Elemental analysis using a conventional method such as SEM-EDX is performed on a sample obtained from the catalyst layer to identify the types of constituent elements of the entire sample and to determine the content (% by mass) of each identified element.

(B) Elemental mapping using a conventional method such as SEM-EDX is performed on a sample obtained from the catalyst layer to identify the types of particles contained in the sample (e.g., an Al-based oxide particle, a Ce-Zr-based complex oxide particle, and optionally other particle(s)).

(C) For each type of particle, elemental analysis by SEM-EDX is performed on a plurality of arbitrarily selected particles (e.g., 50 particles) to identify the types of constituent elements of the particles and to determine the content (% by mass) of each identified element. For each type of particle, the average value of the content (% by mass) of each element is determined.

(D) The content (% by mass) of each type of particle in the sample is determined by drawing up and solving equations representing the relationship among the content (% by mass) of each element in the sample, the content (% by mass) of each element in each type of particle, and the content (% by mass) of each type of particle in the sample, and is defined as the content (% by mass) of each type of particle in the catalyst layer.

< Ce-based oxide >

The term "Ce-based oxide" refers to an oxide containing Ce.

The Ce-based oxide is, for example, in particulate form. The Ce-based oxide is used as a carrier for a catalytically-active component. From the viewpoint of improving supportability for the catalytically-active component, the Ce-based oxide is preferably porous. The Ce-based oxide is distinct from ceria used as a binder, i.e., a ceria binder.

The Ce-based oxide has the ability to absorb oxygen when the oxygen concentration in exhaust gas is high and to release oxygen when the oxygen concentration in exhaust gas is low (hereinafter referred to as "oxygen storage capacity"), and mitigates fluctuations in the oxygen concentration in exhaust gas and expands the operating window of a catalytically-active component. Accordingly, when the catalyst layer contains the Ce-based oxide, the exhaust gas purification performance of the catalyst layer is improved.

The Ce-based oxide may be composed of Ce and O, or may contain one or more elements other than Ce and O (hereinafter referred to as "other element(s)"). The other element(s) can be selected from, for example, rare earth elements other than Ce (e.g., Y, Pr, Sc, La, Nd, Sm, Eu, Gd, Tb, Dy, Ho, Er, Tm, Yb, Lu, and the like), alkaline earth metal elements (e.g., Mg, Ca, Sr, Ba, and the like), Fe, Mn, Ni, Zr, Al, and the like. The other element(s) may form a solid solution phase together with Ce and O, may form a single phase that is a crystalline phase or an amorphous phase (e.g., an oxide phase(s) of the other element(s)), or may form both the solid solution phase and the single phase.

Examples of the Ce-based oxide include ceria ($CeO_2$), an oxide obtained by modifying the surface of ceria with the other element(s), an oxide obtained by dissolving the other element(s) in ceria, and the like.

From the viewpoint of improving the affinity of the Ce-based oxide to a catalytically-active component and effectively suppressing the occurrence of sintering between a catalytically-active component and another catalytically-active component, each of which is supported on the Ce-based oxide, the content of Ce in terms of $CeO_2$ in the Ce-based oxide is preferably 90% by mass or more, more preferably 95% by mass or more, and still more preferably 99% by mass or more, based on the mass of the Ce-based oxide. The upper limit is 100% by mass.

From the viewpoint of improving the affinity of the Ce-based oxide to a catalytically-active component and effectively suppressing the occurrence of sintering between a catalytically-active component and another catalytically-active component, each of which is supported on the Ce-based oxide, the content of Zr in terms of $ZrO_2$ in the Ce-based oxide is preferably 10% by mass or less, more preferably 5% by mass or less, still more preferably 3% by mass or less, and still more preferably 1% by mass or less, based on the mass of the Ce-based oxide. The lower limit is zero. The content of Zr in terms of $ZrO_2$ in the Ce-based oxide is less than the content of Zr in terms of $ZrO_2$ in the Ce-Zr-based complex oxide, and in this respect, the Ce-based oxide is distinguished from the Ce-Zr-based complex oxide. The content of Ce in terms of $CeO_2$ in the Ce-based oxide can be determined in the same manner as the content of Al in terms of $Al_2O_3$ in the Al-based oxide.

In the case where the catalyst layer contains the Ce-based oxide, from the viewpoint of improving exhaust gas purification performance, the content of the Ce-based oxide in the catalyst layer is preferably 2.0% by mass or more and 30% by mass or less, more preferably 3.0% by mass or more and 30% by mass or less, still more preferably 5.0% by mass or more and 25% by mass or less, and still more preferably 10% by mass or more and 20% by mass or less, based on the mass of the catalyst layer. The content of the Ce-based oxide in the catalyst layer can be determined in the same manner as the content of the Al-based oxide in the catalyst layer.

< Ce-Zr-based complex oxide >

The term "Ce-Zr-based complex oxide" refers to an oxide containing Ce and Zr.

The Ce-Zr-based complex oxide is, for example, in particulate form. The Ce-Zr-based complex oxide is used as a carrier of a catalytically-active component. From the viewpoint of improving supportability for the catalytically-active component, the Ce-Zr-based complex oxide is preferably porous.

The Ce-Zr-based complex oxide has oxygen storage capacity, and mitigates fluctuations in the oxygen concentration in exhaust gas and expands the operating window of a catalytically-active component. Accordingly, when the catalyst layer contains the Ce-Zr-based complex oxide, the exhaust gas purification performance of the catalyst layer is improved.

In the Ce-Zr-based complex oxide, Ce and Zr may each form a solid solution phase (e.g., a solid solution phase of $CeO_2$ and $ZrO_2$), may each form a single phase that is either a crystalline phase or an amorphous phase (e.g., a single phase of $CeO_2$ or a single phase of $ZrO_2$), or may form both the solid solution phase and the single phase. However, it is preferable that at least part of Ce and at least part of Zr each form the solid solution phase. The formation of the solid solution can be confirmed using X-ray diffractometry (XRD), SEM-EDX, or the like.

The Ce-Zr-based complex oxide may contain one or more elements other than Ce, Zr, and O (hereinafter referred to as "other element(s)"). The other element(s) can be selected from, for example, rare earth elements other than Ce (e.g., Y, Pr, Sc, La, Nd, Sm, Eu, Gd, Tb, Dy, Ho, Er, Tm, Yb, Lu, and the like), and the like. The other element(s) may form a solid solution phase (e.g., a solid solution phase of $CeO_2$ and the other element(s), a solid solution phase of $ZrO_2$ and the other element(s), and a solid solution phase of $CeO_2$, $ZrO_2$, and the other element(s)), may form a single phase that is a crystalline phase or an amorphous phase (e.g., a single phase of an oxide(s) of the other element(s)), or may form both the solid solution phase and the single phase. However, it is preferable that at least part of the other element(s) form the solid solution phase. The formation of the solid solution phase can be confirmed using XRD, SEM-EDX, or the like.

Examples of the Ce-Zr-based complex oxide include a $CeO_2$-$ZrO_2$ solid solution, an oxide obtained by modifying the surface of a $CeO_2$-$ZrO_2$ solid solution with the other element(s), an oxide obtained by dissolving the other element(s) in a $CeO_2$-$ZrO_2$ solid solution, and the like.

From the viewpoint of improving oxygen storage capacity, the content of Ce in terms of $CeO_2$ in the Ce-Zr-based complex oxide is preferably 5% by mass or more and 95% by mass or less, more preferably 5% by mass or more and 90% by mass or less, still more preferably 7% by mass or more and 90% by mass or less, and still more preferably 10% by mass or more and 85% by mass or less, based on the mass of the Ce-Zr-based complex oxide. The content of Ce in terms of $CeO_2$ in the Ce-Zr-based complex oxide can be determined in the same manner as the content of Al in terms of $Al_2O_3$ in the Al-based oxide.

From the viewpoint of improving heat resistance, the content of Zr in terms of $ZrO_2$ in the Ce-Zr-based complex oxide is preferably 5% by mass or more and 95% by mass or less, more preferably 5% by mass or more and 90% by mass or less, still more preferably 7% by mass or more and 90% by mass or less, and still more preferably 10% by mass or more and 85% by mass or less, based on the mass of the Ce-Zr-based complex oxide. The content of Zr in terms of $ZrO_2$ in the Ce-Zr-based complex oxide can be determined in the same manner as the content of Al in terms of $Al_2O_3$ in the Al-based oxide.

From the viewpoint of improving oxygen storage capacity and heat resistance, the total content of Ce in terms of $CeO_2$ and Zr in terms of $ZrO_2$ in the Ce-Zr-based complex oxide is preferably 70% by mass or more, more preferably 75% by mass or more, still more preferably 80% by mass or more, and still more preferably 85% by mass or more, based on the mass of the Ce-Zr-based complex oxide. The upper limit is 100% by mass.

In the case where the catalyst layer contains the Ce-Zr-based complex oxide, from the viewpoint of improving oxygen storage capacity and heat resistance, the content of the Ce-Zr-based complex oxide in the catalyst layer is preferably 5% by mass or more and 97% by mass or less, more preferably 7% by mass or more and 95% by mass or less, still more preferably 10% by mass or more and 90% by mass or less, and still more preferably 15% by mass or more and 85% by mass or less, based on the mass of the catalyst layer. The content of the Ce-Zr-based complex oxide in the catalyst layer can be determined in the same manner as the content of the Al-based oxide in the catalyst layer.

< Other components >

The catalyst layer may contain other components such as a binder, a stabilizer, and the like. Examples of the binder include inorganic oxide binders such as alumina sol, ceria sol, zirconia sol, titania sol, and silica sol. Examples of the stabilizer include a nitrate, a carbonate, an oxide, or a sulfate of an alkaline earth metal element (e.g., Sr, Ba, and the like).

< Rod-shaped material and non-rod-shaped material >

In view of efficiently forming the first catalyst layer 20 satisfying the formulae 1a and 2a (preferably one or more of the formulae 3a, 4a, and 5a, in addition to the formulae 1a and 2a) (hereinafter referred to as "intended first catalyst layer"), the first catalyst layer 20 preferably contains one or more rod-shaped materials and one or more non-rod-shaped materials.

In view of efficiently forming the second catalyst layer 30 satisfying the formulae 1b and 2b (preferably one or more of the formulae 3b, 4b, and 5b, in addition to the formulae 1b and 2b) (hereinafter referred to as "intended second catalyst layer"), the second catalyst layer 30 preferably contains one or more rod-shaped materials and one or more non-rod-shaped materials.

The rod-shaped material and the non-rod-shaped material each may be a commercially available product, or may be produced by a conventional method.

The rod-shaped material is a material having an average aspect ratio of 4 or more. In view of efficiently forming the intended first catalyst layer and the intended second catalyst layer, the average aspect ratio of the rod-shaped material contained in the first catalyst layer 20 or the second catalyst layer 30 is preferably 4 or more and 100 or less, more preferably 8 or more and 80 or less, still more preferably 10 or more and 60 or less.

The method for determining the average aspect ratio of the rod-shaped material is as follows. The rod-shaped material is observed using a scanning electron microscope. For a rectangle circumscribing a particle constituting the rod-shaped material, arbitrarily selected from within the field of view, the dimension of the long side, the dimension of the short side, and the ratio of the dimension of the long side to the dimension of the short side (the dimension of the long side / the dimension of the short side) are determined. For 200 particles constituting the rod-shaped material, arbitrarily selected from within the field of view, the dimension of the long side, the dimension of the short side, and the ratio are determined. The respective average values are used as the average dimension of the long side, the average dimension of the short side, and the average aspect ratio of the rod-shaped material.

In view of efficiently forming the intended first catalyst layer and the intended second catalyst layer, the average dimension of the long side of the rod-shaped material is preferably 1 $\mu$m or more and 10 $\mu$m or less, more preferably 1.3 $\mu$m or more and 8 $\mu$m or less, still more preferably 1.5 $\mu$m or more and 6 $\mu$m or less.

In view of efficiently forming the intended first catalyst layer and the intended second catalyst layer, the average dimension of the short side of the rod-shaped material is preferably 0.08 $\mu$m or more and 1 $\mu$m or less, more preferably 0.10 $\mu$m or more and 0.8 $\mu$m or less, still more preferably 0.12 $\mu$m or more and 0.6 $\mu$m or less.

The non-rod-shaped material is a material having an average aspect ratio less than 4. The lower limit of the average aspect ratio is 1. In view of efficiently forming the intended first catalyst layer and the intended second catalyst layer, the average aspect ratio of the non-rod-shaped material contained in the first catalyst layer 20 or the second catalyst layer 30 is preferably 3.0 or less, more preferably 2.5 or less, still more preferably 2.0 or less. The average aspect ratio of the non-rod-shaped material can be determined in the same manner as for the average aspect ratio of the rod-shaped material.

From the viewpoint of efficiently forming the intended first catalyst layer and the intended second catalyst layer, D50 of the non-rod-shaped material is preferably 1 $\mu$m or more and 10 $\mu$m or less, more preferably 2 $\mu$m or more and 9 $\mu$m or less, and still more preferably 3 $\mu$m or more and 8 $\mu$m or less. The method for measuring D50 is described below.

From the viewpoint of efficiently forming the intended first catalyst layer and the intended second catalyst layer, D90 of the non-rod-shaped material is preferably 5 $\mu$m or more and 40 $\mu$m or less, more preferably 8 $\mu$m or more and 35 $\mu$m or less, and still more preferably 10 $\mu$m or more and 30 $\mu$m or less. The method for measuring D90 is described below.

D50 and D90 refer to the particle sizes at which the cumulative volumes reach 50% and 90%, respectively, in the volume-based particle size distribution as determined by the laser diffraction scattering particle size distribution measurement method. The method for measuring D50 and D90 is as follows.

Using an automatic sample feeder ("Microtrac SDC" manufactured by Nikkiso Co., Ltd.) for a laser diffraction particle size distribution measuring apparatus, a powder sample is introduced into a water-soluble solvent, and irradiated with a 40 W ultrasound for 360 seconds, under a flow rate of 40%. Thereafter, the volume-based particle size distribution is measured, using a laser diffraction particle size distribution measuring apparatus "Microtrac MT3300 II", manufactured by Nikkiso Co., Ltd., and the particle sizes ($\mu$m) at which the cumulative volumes reach 50% and 90%, respectively, are determined from the volume-based particle size distribution. The measurements are carried out twice, and the mean value of the particle size ($\mu$m) at which the cumulative volume reaches 50% is defined as D50 ($\mu$m), and the mean value of the particle size ($\mu$m) at which the cumulative volume reaches 90% is defined as D90 ($\mu$m). The measurements are carried out under the following conditions: particle refractive index: 1.5; particle shape: true sphere; solvent refractive index: 1.3; set zero: 30 seconds; and measurement time: 30 seconds.

One or more rod-shaped materials can be selected from the inorganic oxides described in the section < Carrier >, and are preferably selected from the Al-based oxide, the Ce-based oxide, and the Ce-Zr-based complex oxide.

One or more non-rod-shaped materials can be selected from the inorganic oxides described in the section < Carrier >, and are preferably selected from the Al-based oxide, the Ce-based oxide, and the Ce-Zr-based complex oxide.

From the viewpoint of improving exhaust gas purification performance, at least one of the rod-shaped material and the non-rod-shaped material preferably contains one or more oxides selected from the Ce-based oxide and the Ce-Zr-based complex oxide.

In one embodiment, one of the rod-shaped material and the non-rod-shaped material contains one or more oxides selected from the Ce-based oxide and the Ce-Zr-based complex oxide. The rod-shaped material may contain the one or more oxides, or the non-rod-shaped material may contain the one or more oxides. One of the rod-shaped material and the non-rod-shaped material may contain the Al-based oxide in addition to the one or more oxides. The other of the rod-shaped material and the non-rod-shaped material contains, for example, the Al-based oxide.

In another embodiment, both of the rod-shaped material and the non-rod-shaped material contain one or more oxides selected from the Ce-based oxide and the Ce-Zr-based complex oxide. The rod-shaped material may contain the Al-based oxide in addition to the one or more oxides. The non-rod-shaped material may contain the Al-based oxide in addition to the one or more oxides.

In the case where the first catalyst layer 20 contains the rod-shaped material, from the viewpoint of efficiently forming the first catalyst layer 20 satisfying the formulae 1a and 2a (preferably one or more of formulae 3a, 4a, and 5a, in addition to the formulae 1a and 2a), the content of the rod-shaped material in the first catalyst layer 20 is preferably 4% by mass or more and 35% by mass or less, more preferably 6% by mass or more and 32% by mass or less, and still more preferably 8% by mass or more and 30% by mass or less, based on the mass of the first catalyst layer 20. The expression "the content of the rod-shaped material in the first catalyst layer 20" refers to, in the case where the first catalyst layer 20 contains a single rod-shaped material, the content of the single rod-shaped material, and in the case where the first catalyst layer 20 contains multiple rod-shaped materials, the total content of the multiple rod-shaped materials.

In the case where the second catalyst layer 30 contains the rod-shaped material, from the viewpoint of efficiently forming the second catalyst layer 30 satisfying the formulae 1b and 2b (preferably one or more of the formulae 3b, 4b, and 5b, in addition to the formulae 1b and 2b), the content of the rod-shaped material in the second catalyst layer 30 is preferably 4% by mass or more and 35% by mass or less, more preferably 6% by mass or more and 32% by mass or less, and still more preferably 8% by mass or more and 30% by mass or less, based on the mass of the second catalyst layer 30. The expression "the content of the rod-shaped material in the second catalyst layer 30" refers to, in the case where the second catalyst layer 30 contains a single rod-shaped material, the content of the single rod-shaped material, and in the case where the second catalyst layer 30 contains multiple rod-shaped materials, the total content of the multiple rod-shaped materials.

In the case where the first catalyst layer 20 contains the non-rod-shaped material, from the viewpoint of efficiently forming the first catalyst layer 20 satisfying the formulae 1a and 2a (preferably one or more of the formulae 3a, 4a, and 5a, in addition to the formulae 1a and 2a), the content of the non-rod-shaped material in the first catalyst layer 20 is preferably 50% by mass or more and 95% by mass or less, more preferably 55% by mass or more and 93% by mass or less, and still more preferably 60% by mass or more and 90% by mass or less, based on the mass of the first catalyst layer. The expression "the content of the non-rod-shaped material in the first catalyst layer 20" refers to, in the case where the first catalyst layer 20 contains a single non-rod-shaped material, the content of the single non-rod-shaped material, and in the case where the first catalyst layer 20 contains multiple non-rod-shaped materials, the total content of the multiple non-rod-shaped materials.

In the case where the second catalyst layer 30 contains the non-rod-shaped material, from the viewpoint of efficiently forming the second catalyst layer 30 satisfying the formulae 1b and 2b (preferably one or more of the formulae 3b, 4b, and 5b, in addition to the formulae 1b and 2b), the content of the non-rod-shaped material in the second catalyst layer 30 is preferably 50% by mass or more and 95% by mass or less, more preferably 55% by mass or more and 93% by mass or less, and still more preferably 60% by mass or more and 90% by mass or less, based on the mass of the second catalyst layer 30. The expression "the content of the non-rod-shaped material in the second catalyst layer 30" refers to, in the case where the second catalyst layer 30 contains a single non-rod-shaped material, the content of the single non-rod-shaped material, and in the case where the second catalyst layer 30 contains multiple non-rod-shaped materials, the total content of the multiple non-rod-shaped materials.

< Effect of exhaust gas purification catalyst >

Exhaust gas emitted from an internal combustion engine flows through the exhaust gas path in the exhaust gas pipe P from one end to the other end of the exhaust gas pipe P, and is purified by the catalyst 1 provided in the exhaust pipe P. In this case, the exhaust gas that has flowed in from the end (opening) on the exhaust gas inflow side of the inflow-side cell 13a passes through the porous partition wall 12 and flows out from the end (opening) on the exhaust gas outflow side of the outflow-side cell 13b. This configuration is known as a wall-flow type.

In the catalyst 1, when the exhaust gas that has flowed in from the end (opening) on the exhaust gas inflow side of the inflow-side cell 13a passes through the porous partition wall 12, particulate matter (PM) in the exhaust gas is collected in pores of the partition wall 12, pores of the first catalyst layer 20 and pores of the second catalyst layer 30. Accordingly, the catalyst 1 is useful as a particulate filter for a gasoline engine or as a diesel particulate filter for a diesel engine.

Since the first catalyst layer 20 and the partition wall 12 satisfy the formulae 1a and 2a (preferably one or more of the formulae 3a, 4a, and 5a, in addition to the formulae 1a and 2a), both improvement of PM collection performance and suppression of pressure loss increase can be achieved.

Since the second catalyst layer 30 and the partition wall 12 satisfy the formulae 1b and 2b (preferably one or more of the formulae 3b, 4b, and 5b, in addition to the formulae 1b and 2b), both improvement of PM collection performance and suppression of pressure loss increase can be achieved.

<< Production method of exhaust gas purification catalyst >>

Hereinafter, the production method of the catalyst 1 will be described.

A substrate 10, a first slurry for forming the first catalyst layer 20, and a second slurry for forming the second catalyst layer 30 are prepared.

The compositions of the first slurry and the second slurry are respectively adjusted according to the compositions of the first catalyst layer 20 and the second catalyst layer 30. Each of the first slurry and the second slurry contains, for example, a supply source of a noble metal element, an inorganic oxide particle (e.g., a rod-shaped material and a non-rod-shaped material), a binder, a pore-forming agent, a solvent, and the like. The supply source of a noble metal element may be, for example, a salt of the noble metal element, and examples of the salt of the noble metal element include nitrates, ammine complex salts, acetates, and chlorides. The description with respect to the inorganic oxide constituting the inorganic oxide particle is as described above. Examples of the binder include alumina sol, zirconia sol, titania sol, silica sol, ceria sol, and the like. Examples of the pore-forming agent include cross-linked polymethyl (meth)acrylate particles, cross-linked polybutyl (meth)acrylate particles, cross-linked polystyrene particles, cross-linked polyacrylate particles, melamine-based resins, and the like. Examples of the solvent include water, organic solvents, and the like.

After the first slurry is applied to a portion on the exhaust gas inflow side of the substrate 10, and then dried. In this manner, a precursor of the first catalyst layer 20 is formed. The drying temperature is, for example, 40°C or more and 150°C or less. The drying time is, for example, 5 minutes or more and 1 hour or less.

After the formation of the precursor of the first catalyst layer 20, the resulting substrate is calcined. In this manner, the first catalyst layer 20 is formed. The calcining temperature is, for example, 350°C or more and 600°C or less. The calcining time is, for example, 20 minutes or more and 5 hours or less. The atmosphere during the calcination is usually an air atmosphere.

After the second slurry is applied to a portion on the exhaust gas outflow side of the substrate 10, and then dried. In this manner, a precursor of the second catalyst layer 30 is formed. The drying temperature is, for example, 40°C or more and 150°C or less. The drying time is, for example, 5 minutes or more and 1 hour or less.

After the formation of the precursor of the second catalyst layer 30, the resulting substrate is calcined. In this manner, the second catalyst layer 30 is formed. The calcining temperature is, for example, 350°C or more and 600°C or less. The calcination time is, for example, 20 minutes or more and 5 hours or less. The atmosphere during the calcination is usually an air atmosphere.

By adjusting the types of materials (e.g., the rod-shaped material and the non-rod-shaped material) constituting the first slurry, the solid concentration (viscosity) of the first slurry, the coating amount of the first slurry, the particle size and amount of the pore-forming agent contained in the first slurry, and the like, it is possible to adjust the average length $L_{20}$ of the first catalyst layer 20, the thickness of the first catalyst layer 20, the coating amount of the first catalyst layer 20, Ra, Xa, Ya, and the like.

By adjusting the types of materials (e.g., the rod-shaped material and the non-rod-shaped material) constituting the second slurry, the solid concentration (viscosity) of the second slurry, the coating amount of the second slurry, the particle size and amount of the pore-forming agent contained in the second slurry, and the like, it is possible to adjust the average length $L_{30}$ of the second catalyst layer 30, the thickness of the second catalyst layer 30, the coating amount of the second catalyst layer 30, Rb, Xb, Yb, and the like.

From the viewpoint of more effectively achieving both improvement of PM collection performance and suppression of pressure loss increase, the amount of the pore-forming agent in the slurry is preferably 10% by mass or more and 60% by mass or less, more preferably 15% by mass or more and 55% by mass or less, and still more preferably 20% by mass or more and 50% by mass or less, based on the mass of the catalyst layer formed by drying and calcining the slurry.

From the viewpoint of more effectively achieving both improvement of PM collection performance and suppression of pressure loss increase, D50 of the pore-forming agent is preferably 1 $\mu$m or more and 10 $\mu$m or less, more preferably 2 $\mu$m or more and 9 $\mu$m or less, and still more preferably 3 $\mu$m or more and 8 $\mu$m or less. D50 refers to the particle size at which the cumulative volume reaches 50% in the volume-based particle size distribution as determined by the laser diffraction scattering particle size distribution measurement method. The method for measuring D50 is as described above.

**Examples**

Hereinafter, the present invention will be specifically described with reference to the Examples; however, the present invention is not limited to the Examples.

**< Example 1 >**

(1) Preparation of slurry

To a mixture of an aqueous solution of palladium nitrate and an aqueous solution of rhodium nitrate, a non-rod-shaped Ce-Zr-based complex oxide powder (average aspect ratio: 2 or less), a non-rod-shaped alumina powder (average aspect ratio: 2 or less), and a rod-shaped alumina powder (average aspect ratio: 40, average dimension of long side: 4.8 $\mu$m, average dimension of short side: 0.12 $\mu$m) were added. Subsequently, barium hydroxide, alumina sol, zirconia sol, a pore-forming agent (cross-linked polymethyl (meth)acrylate particles having D50 of 5 $\mu$m), and water as a solvent were added to the mixture to prepare a slurry.

The contents of components in the slurry were adjusted such that the content of palladium in terms of metal was 1.6% by mass, the content of rhodium in terms of metal was 0.4% by mass, the content of the non-rod-shaped Ce-Zr-based complex oxide powder was 70% by mass, the content of the non-rod-shaped alumina powder was 12% by mass, the content of the rod-shaped alumina powder was 6% by mass, the content of alumina sol in terms of solid content was 5% by mass, and the content of zirconia sol in terms of solid content was 5% by mass, based on the mass of the catalyst layer formed by drying and calcining the slurry. The content of the pore-forming agent in the slurry was adjusted to 30% by mass based on the mass of the catalyst layer formed by drying and calcining the slurry. The mass of the catalyst layer formed by drying and calcining the slurry can be determined by subtracting the mass of components that disappear during drying and calcining of the slurry (e.g., the solvent, the pore-forming agent, and the like) from the mass of the slurry.

The $D_{90}$ values of the non-rod-shaped Ce-Zr-based complex oxide powder and the non-rod-shaped alumina powder were both 20 $\mu$m.

(2) Production of exhaust gas purification catalyst

A wall-flow substrate having the structure shown in Figures 2 to 6, namely, a substrate including inflow-side cells extending in the axial direction of the substrate, outflow-side cells extending in the axial direction of the substrate, and a porous partition wall separating the inflow-side cells and the outflow-side cells, was prepared. The thickness of the partition wall was 150 to 300 $\mu$m, the total number of inflow-side cells and outflow-side cells in a cross section perpendicular to the axial direction of the substrate was 300 cells per square inch, the volume of the substrate was 1.0 L, and the length of the substrate was 91 mm.

The slurry was applied to a portion on the exhaust gas inflow side of the substrate, and then dried at 90°C for 10 minutes. Thus, a first precursor (the first catalyst layer before calcining) composed of the solid content of the slurry was formed on the inflow-side cell side of the partition wall of the substrate.

After drying, the slurry was applied to a portion on the exhaust gas outflow side of the substrate, and then dried at 90°C for 10 minutes. Thus, a second precursor (the second catalyst layer before calcining) composed of the solid content of the slurry was formed on the outflow-side cell side of the partition wall of the substrate.

Thereafter, the substrate was calcined at 450°C for 1 hour to form the first catalyst layer and the second catalyst layer on the substrate. In this manner, an exhaust gas purification catalyst of Example 1 was obtained.

When the slurry was applied to the portions on the exhaust gas inflow and outflow sides of the substrate, the slurry was applied such that the ratio of the average length of the first catalyst layer to the length of the substrate was 0.45, the ratio of the average length of the second catalyst layer to the length of the substrate was 0.70, the mass of the first catalyst layer per unit volume of the portion of the substrate provided with the first catalyst layer was 40 g/L, and the mass of the second catalyst layer per unit volume of the portion of the substrate provided with the second catalyst layer was 40 g/L.

Ra, Xa, Ya, Rb, Xb, and Yb were determined for the exhaust gas purification catalyst of Example 1 in accordance with the above-described methods.

The cut piece P1' shown in Figures 8A to 8C was used for measurement of Ra, Xa, and Ya. The cut piece P1 shown in Figures 7A and 7B was used for preparation of the cut piece P1'. The cut piece P1 used was in the form of a cube having a dimension of 10 mm in the vertical direction (in the vertical direction in Figure 7A), a dimension of 10 mm in the horizontal direction (in the horizontal direction in Figure 7A), and a dimension of 10 mm in the axis direction (in the vertical direction in Figure 7B). In the cut piece P1', $\alpha_1$ (the average dimension of one edge of the opening of the inflow-side cell 13a) was 0.121 cm, $\beta_1$ (the length of the cut piece P1' in the axis direction) was 1 cm, $\gamma_1$ (the number of the effective filtration faces of the cut piece P1') was 60, and $A_1$ (the effective filtration area of the cut piece P1') was 7.26 cm$^2$.

The cut piece P2' shown in Figures 10A to 10C was used for measurement of Rb, Xb, and Yb. The cut piece P2 shown in Figures 9A and 9B was used for preparation of the cut piece P2'. The cut piece P2 used was in the form of a cube having a dimension of 10 mm in the vertical direction (in the vertical direction in Figure 9A), a dimension of 10 mm in the horizontal direction (in the horizontal direction in Figure 9A), and a dimension of 10 mm in the axis direction (in the vertical direction in Figure 9B). In the cut piece P2', $\alpha_2$ (the average dimension of one edge of the opening of the outflow-side cell 13b) was 0.121 cm, $\beta_2$ (the length of the cut piece P2' in the axis direction) was 1 cm, $\gamma_2$ (the number of the effective filtration faces of the cut piece P2') was 60, and $A_2$ (the effective filtration area of the cut piece P2') was 7.26 cm$^2$.

Rc (cm$^3$/(cm$^2$·s·Pa)), i.e., the gas permeability of the partition wall alone as determined using a permporometer, was $1.59 \times 10^{-2}$ (cm$^3$/(cm$^2$·s·Pa)).

Xc ($\mu$m) and Yc ($\mu$m), i.e., the 50% flow pore diameter and the 10% flow pore diameter of the partition wall alone as determined by a bubble point method using a permporometer, were 10.78 $\mu$m and 14.24 $\mu$m, respectively. The value of Xc $\times$ Yc was 153.51 $\mu$m$^2$.

(3) Evaluation of PM collection performance

A gasoline engine vehicle equipped with the exhaust gas purification catalyst of Example 1 was driven under the driving conditions of Worldwide Harmonized Light Vehicles Test Cycle (WLTC). The number of PM particles (PN$_{cat}$) in the exhaust gas that passed through the exhaust gas purification catalyst was measured for each of the following periods: a low-speed driving period from the start of driving to 589 seconds after the start of driving, a medium-speed driving period from 589 to 1022 seconds after the start of driving, a high speed driving period from 1022 to 1477 seconds after the start of driving, and an ultra-high-speed driving period from 1477 to 1800 seconds after the start of driving. In addition, the number of PM particles (PN$_{all}$) directly discharged from the engine was measured, and the PM collection performance of the exhaust gas purification catalyst of Example 1 was determined using the following formula. PM collection performance = 1 - (PN$_{cat}$ / PN$_{all}$)

The measurement conditions of evaluating PM collection performance were as follows.

Evaluated vehicle: 1.5 L direct injection turbo engine
Gasoline used: fuel for verification test
PM measuring apparatus: manufactured by HORIBA, Ltd.

Using a gasoline engine vehicle equipped with a substrate (on which neither first catalyst layer nor second catalyst layer was formed) instead of the exhaust gas purification catalyst of Example 1, the PM collection performance of the substrate was evaluated in the same manner as described above.

The PM collection performance ratio (%) was determined based on the following formula:

PM collection performance ratio = (PM collection performance of exhaust gas purification catalyst of Example 1) / (PM collection performance of substrate) $\times$ 100

(4) Evaluation of pressure loss

The lateral face of the exhaust gas purification catalyst of Example 1 was supported and fixed such that the end face on the exhaust gas inflow side was oriented upward. Air was drawn by suction at a rate of 50 L/sec from the lower side of the fixed exhaust gas purification catalyst (the end face on the exhaust gas outflow side). The difference between the air pressure at the end face on the exhaust gas inflow side and the air pressure at the end face on the exhaust gas outflow side, measured 10 seconds after the start of suction, was determined and defined as the pressure loss of the exhaust gas purification catalyst of Example 1.

Using a substrate (on which neither the first catalyst layer nor the second catalyst layer was formed) instead of the exhaust gas purification catalyst of Example 1, the difference between the air pressure at the end face on the exhaust gas inflow side and the air pressure at the end surface on the exhaust gas outflow side, measured 10 seconds after the start of suction, was determined in the same manner as described above and defined as the pressure loss of the substrate.

A pressure loss ratio (%) was determined based on the following formula:

Pressure loss ratio = (Pressure loss of exhaust gas purification catalyst of Example 1 / Pressure loss of substrate) × 100

< Example 2 >

The same operation as in Example 1 was performed, except that the contents of components in the slurry were adjusted such that the content of the non-rod-shaped alumina powder was 6% by mass, the content of the rod-shaped alumina powder was 12% by mass, and the contents of the other components were the same as in Example 1, based on the mass of the catalyst layer formed by drying and calcining of the slurry.

< Example 3 >

The same operation as in Example 1 was performed, except that the contents of components in the slurry were adjusted such that the content of the non-rod-shaped alumina powder was 14% by mass, the content of the rod-shaped alumina powder was 4% by mass, and the contents of the other components were the same as in Example 1, based on the mass of the catalyst layer formed by drying and calcining of the slurry.

< Example 4 >

The same operation as in Example 1 was performed, except that the D50 of the pore-forming agent was changed to 1 μm.

< Example 5 >

The same operation as in Example 1 was performed, except that the D50 of the pore-forming agent was changed to 3 μm.

< Example 6 >

The same operation as in Example 1 was performed, except that the content of the pore-forming agent in the slurry was changed to 50% by mass based on the mass of the catalyst layer formed by drying and calcining of the slurry.

< Example 7 >

The same operation as in Example 1 was performed, except that a rod-shaped titania powder (average aspect ratio: 13, average dimension of long side: 1.7 μm, average dimension of short side: 0.13 μm) was used instead of the rod-shaped alumina powder (average aspect ratio: 40, average dimension of long side: 4.8 μm, average dimension of short side: 0.12 μm), and that the D50 of the pore-forming agent was changed to 3 μm.

< Example 8 >

The same operation as in Example 1 was performed, except that a rod-shaped titania powder (average aspect ratio: 14, average dimension of long side: 2.9 μm, average dimension of short side: 0.21 μm) was used instead of the rod-shaped alumina powder (average aspect ratio: 40, average dimension of long side: 4.8 μm, average dimension of short side: 0.12 μm), and that the D50 of the pore-forming agent was changed to 3 μm.

< Example 9 >

The same operation as in Example 1 was performed, except that a rod-shaped titania powder (average aspect ratio: 19, average dimension of long side: 5.1 μm, average dimension of short side: 0.27 μm) was used instead of the rod-shaped alumina powder (average aspect ratio: 40, average dimension of long side: 4.8 μm, average dimension of short side: 0.12 μm), and that the D50 of the pore-forming agent was changed to 3 μm.

< Comparative Example 1 >

The same operation as in Example 1 was performed, except that the contents of components in the slurry were adjusted such that the content of the non-rod-shaped alumina powder was 18% by mass, the content of the rod-shaped alumina powder was 0% by mass (i.e., the rod-shaped alumina powder was not used), and the contents of the other components were the same as in Example 1, based on the mass of the catalyst layer formed by drying and calcining of the slurry, and that the content of the pore-forming agent in the slurry was changed to 50% by mass based on the mass of the catalyst layer formed by drying and calcining of the slurry.

< Comparative Example 2 >

The same operation as in Example 1 was performed, except that the amounts of the respective components in the slurry were adjusted such that the content of the non-rod-shaped Ce-Zr-based complex oxide powder was 0% by mass (i.e., the non-rod-shaped Ce-Zr-based complex oxide powder was not used), the content of the non-rod-shaped alumina powder was 0% by mass (i.e., the non-rod-shaped alumina powder was not used), the content of the rod-shaped alumina powder was 75% by mass, the content of the alumina sol was 23% by mass in terms of solid content, the content of the zirconia sol was 0% by mass in terms of solid content (i.e., the zirconia sol was not used), and the contents of the other components were the same as in Example 1, based on the mass of the catalyst layer formed by drying and calcining of the slurry.

< Comparative Example 3 >

The same operation as in Example 1 was performed, except that the contents of components in the slurry were adjusted such that the content of the non-rod-shaped alumina powder was 18% by mass, the content of the rod-shaped alumina powder was 0% by mass (i.e., the rod-shaped alumina powder was not used), and the contents of the other components were the same as in Example 1, based on the mass of the catalyst layer formed by drying and calcining of the slurry.

< Comparative Example 4 >

The same operation as in Example 1 was performed, except that a non-rod-shaped alumina powder (average aspect ratio: 3, average dimension of long side: 19.5 μm, average dimension of short side: 6.5 μm) was used instead of the rod-shaped alumina powder (average aspect ratio: 40, average dimension of long side: 4.8 μm, average dimension of short side: 0.12 μm).

The results of Examples 1 to 9 and Comparative Examples 1 to 4 are shown in Tables 1 and 2. In Table 1, the term "content (mass%)" of each component refers to the content (% by mass) based on the mass of the catalyst layer formed by drying and calcining of the slurry, the term "AR" refers to the aspect ratio, and the term "non-rod-shaped complex oxide powder" refers to the "non-rod-shaped Ce-Zr-based complex oxide powder".

[Table 1]

Table 1

| | Non-rod-shaped complex oxide powder | | Non-rod-shaped alumina powder | | | | Rod-shaped alumina powder | | Rod-shaped titania powder | | Pore-forming agent | |
|---|---|---|---|---|---|---|---|---|---|---|---|---|
| | AR | Content (mass%) | AR | Content (mass%) | AR | Content (mass%) | AR | Content (mass%) | AR | Content (mass%) | D50 (μm) | Content (mass%) |
| Example 1 | ≤ 2 | 70 | ≤ 2 | 12 | - | - | 40 | 6 | - | - | 5 | 30 |
| Example 2 | ≤ 2 | 70 | ≤ 2 | 6 | - | - | 40 | 12 | - | - | 5 | 30 |
| Example 3 | ≤ 2 | 70 | ≤ 2 | 14 | - | - | 40 | 4 | - | - | 5 | 30 |
| Example 4 | ≤ 2 | 70 | ≤ 2 | 12 | - | - | 40 | 6 | - | - | 1 | 30 |
| Example 5 | ≤ 2 | 70 | ≤ 2 | 12 | - | - | 40 | 6 | - | - | 3 | 30 |
| Example 6 | ≤ 2 | 70 | ≤ 2 | 12 | - | - | 40 | 6 | - | - | 5 | 50 |
| Example 7 | ≤ 2 | 70 | ≤ 2 | 12 | - | - | - | - | 13 | 6 | 3 | 30 |
| Example 8 | ≤ 2 | 70 | ≤ 2 | 12 | - | - | - | - | 14 | 6 | 3 | 30 |
| Example 9 | ≤ 2 | 70 | ≤ 2 | 12 | - | - | - | - | 19 | 6 | 3 | 30 |
| Comparative Example 1 | ≤ 2 | 70 | ≤ 2 | 18 | - | - | - | - | - | - | 5 | 50 |
| Comparative Example 2 | - | - | - | - | - | - | 40 | 75 | - | - | 5 | 30 |
| Comparative Example 3 | ≤ 2 | 70 | ≤ 2 | 18 | - | - | - | - | - | - | 5 | 30 |
| Comparative Example 4 | ≤ 2 | 70 | ≤ 2 | 12 | 3 | 6 | - | - | - | - | 5 | 30 |

Table 2

| | First catalyst layer | | | | Second catalyst layer | | | | Exhaust gas purification catalyst | |
|---|---|---|---|---|---|---|---|---|---|---|
| | Ra $(cm^3/(cm^2 \cdot S \cdot Pa))$ | Xa $(\mu m)$ | Ya $(\mu m)$ | Xa × Ya $(\mu m^2)$ | Rb $(cm^3/(cm^2 \cdot s \cdot Pa))$ | Xb $(\mu m)$ | Yb $(\mu m)$ | Xb × Yb $(\mu m^2)$ | PM collection performance ratio (%) | Pressure loss ratio (%) |
| Example 1 | $3.68 \times 10^{-3}$ | 1.62 | 2.82 | 4.57 | $4.04 \times 10^{-3}$ | 1.78 | 2.85 | 5.07 | 98.8 | 218 |
| Example 2 | $2.93 \times 10^{-3}$ | 1.24 | 2.21 | 2.74 | $2.94 \times 10^{-3}$ | 1.28 | 2.21 | 2.83 | 99.4 | 264 |
| Example 3 | $4.27 \times 10^{-3}$ | 1.93 | 2.98 | 5.75 | $4.21 \times 10^{-3}$ | 1.87 | 2.82 | 5.27 | 98.2 | 199 |
| Example 4 | $1.96 \times 10^{-3}$ | 0.71 | 3.94 | 2.80 | $1.91 \times 10^{-3}$ | 0.80 | 3.47 | 2.78 | 98.6 | 337 |
| Example 5 | $3.17 \times 10^{-3}$ | 1.37 | 3.14 | 4.30 | $3.11 \times 10^{-3}$ | 1.35 | 3.11 | 4.20 | 98.6 | 242 |
| Example 6 | $3.72 \times 10^{-3}$ | 1.67 | 2.72 | 4.54 | $5.31 \times 10^{-3}$ | 2.04 | 2.97 | 6.06 | 99.0 | 193 |
| Example 7 | $\mathbf{4.15} \times 10^{-3}$ | 1.89 | 3.08 | 5.82 | $4.02 \times 10^{-3}$ | 1.78 | 2.80 | 4.98 | 98.3 | 210 |
| Example 8 | $3.96 \times 10^{-3}$ | 1.95 | 3.13 | 6.10 | $3.77 \times 10^{-3}$ | 1.87 | 3.03 | 5.67 | 98.4 | 207 |
| Example 9 | $4.48 \times 10^{-3}$ | 2.05 | 3.04 | 6.23 | $4.58 \times 10^{-3}$ | 1.97 | 2.90 | 5.71 | 98.0 | 197 |
| Comparative Example 1 | $7.29 \times 10^{-3}$ | 3.25 | 4.66 | 15.15 | $6.74 \times 10^{-3}$ | 3.05 | 4.28 | 13.05 | 95.6 | 189 |
| Comparative Example 2 | $1.13 \times 10^{-3}$ | 0.47 | 5.64 | 2.65 | $0.93 \times 10^{-3}$ | 0.45 | 4.45 | 2.00 | 99.1 | 567 |
| Comparative Example 3 | $5.16 \times 10^{-3}$ | 2.35 | 3.54 | 8.32 | $4.50 \times 10^{-3}$ | 2.38 | 3.59 | 8.54 | 96.6 | 185 |
| Comparative Example 4 | $3.52 \times 10^{-3}$ | 2.89 | 8.73 | 25.23 | $3.00 \times 10^{-3}$ | 2.64 | 8.27 | 21.83 | 95.2 | 164 |

From the above results, it was confirmed that the exhaust gas purification catalyst satisfying the following formulae 1a and 2a and/or the following formulae 1b and 2b can achieve both improvement of PM collection performance and suppression of pressure loss increase.

$$1.30 \times 10^{-3} \leq Ra \qquad \ldots (1a)$$

$$Xa \times Ya \leq 8.00 \qquad \ldots (2a)$$

$$1.30 \times 10^{-3} \leq Rb \qquad \ldots (1b)$$

$$Xb \times Yb \leq 8.00 \qquad \ldots (2b)$$

**Description of Reference Signs**

| | |
|---|---|
| 1 | Exhaust gas purification catalyst |
| 10 | Substrate |
| 11 | Tubular member |
| 12 | Partition wall |
| 13 | Cell |
| 13a | Inflow-side cell |
| 13b | Outflow-side cell |
| 14 | First sealing member |
| 15 | Second sealing member |
| 20 | First catalyst layer |
| 30 | Second catalyst layer |
| S1a | Outer surface on inflow-side cell side of partition wall |
| S1b | Outer surface on outflow-side cell side of partition wall |

**Claims**

1.  An exhaust gas purification catalyst comprising: a substrate extending in an exhaust gas flow direction; and at least one of a first catalyst layer and a second catalyst layer,
    wherein the substrate comprises:

    an inflow-side cell extending in the exhaust gas flow direction and having an open end on an exhaust gas inflow side thereof and a closed end on an exhaust gas outflow side thereof;
    an outflow-side cell extending in the exhaust gas flow direction and having a closed end on an exhaust gas inflow side thereof and an open end on an exhaust gas outflow side thereof; and
    a porous partition wall separating the inflow-side cell and the outflow-side cell from each other,
    wherein the first catalyst layer is formed on an inflow-side cell side of the partition wall from an end on an exhaust gas inflow side of the partition wall along the exhaust gas flow direction,
    wherein the second catalyst layer is formed on an outflow-side cell side of the partition wall from an end on an exhaust gas outflow side of the partition wall along a direction opposite to the exhaust gas flow direction, and
    wherein the exhaust gas purification catalyst satisfies the following formulae 1a and 2a:

    $$1.30 \times 10^{-3} \leq Ra \qquad \ldots (1a)$$

    $$Xa \times Ya \leq 8.00 \qquad \ldots (2a)$$

    wherein Ra represents a gas permeability ($cm^3/(cm^2 \cdot s \cdot Pa)$) of the first catalyst layer and the partition wall as determined using a permporometer, Xa represents a 50% flow pore diameter ($\mu m$) of the first catalyst layer and the partition wall as determined by a bubble point method using a permporometer, and Ya represents a 10% flow

pore diameter ($\mu$m) of the first catalyst layer and the partition wall as determined by a bubble point method using a permporometer,
and/or satisfies the following formulae 1b and 2b:

$$1.30 \times 10^{-3} \leq Rb \qquad ... (1b)$$

$$Xb \times Yb \leq 8.00 \qquad ... (2b)$$

wherein Rb represents a gas permeability ($cm^3/(cm^2 \cdot s \cdot Pa)$) of the second catalyst layer and the partition wall as determined using a permporometer, Xb represents a 50% flow pore diameter ($\mu$m) of the second catalyst layer and the partition wall as determined by a bubble point method using a permporometer, and Yb represents a 10% flow pore diameter ($\mu$m) of the second catalyst layer and the partition wall as determined by a bubble point method using a permporometer.

2. The exhaust gas purification catalyst as claimed in claim 1, wherein the exhaust gas purification catalyst satisfies the following formula 3a:

$$2.00 \leq Xa \times Ya \qquad ... (3a)$$

and/or satisfies the following formula 3b:

$$2.00 \leq Xb \times Yb \qquad ... (3b).$$

3. The exhaust gas purification catalyst as claimed in claim 1 or 2, wherein the exhaust gas purification catalyst satisfies the following formula 4a:

$$0.60 \leq Xa \qquad ... (4a)$$

and/or satisfies the following formula 4b:

$$0.60 \leq Xb \qquad ... (4b).$$

4. The exhaust gas purification catalyst as claimed in claim 1 or 2, wherein the exhaust gas purification catalyst satisfies the following formula 5a:

$$Ya \leq 5.00 \qquad ... (5a)$$

and/or satisfies the following formula 5b:

$$Yb \leq 5.00 \qquad ... (5b).$$

5. The exhaust gas purification catalyst as claimed in claim 1 or 2, wherein the first catalyst layer and the second catalyst layer each comprise a rod-shaped material and a non-rod-shaped material.

6. The exhaust gas purification catalyst as claimed in claim 5, wherein at least one of the rod-shaped material and the non-rod-shaped material comprises one or more selected from a Ce-based oxide and a Ce-Zr-based complex oxide.

7. The exhaust gas purification catalyst as claimed in claim 5, wherein a content of the rod-shaped material in the first catalyst layer is 4 % by mass or more and 35 % by mass or less, based on a mass of the first catalyst layer, and wherein a content of the rod-shaped material in the second catalyst layer is 4 % by mass or more and 35 % by mass or less, based on a mass of the second catalyst layer.

8. The exhaust gas purification catalyst as claimed in claim 5, wherein a content of the non-rod-shaped material in the first catalyst layer is 50 % by mass or more and 95 % by mass or less, based on a mass of the first catalyst layer, and wherein a content of the non-rod-shaped material in the second catalyst layer is 50 % by mass or more and 95 % by mass or less, based on a mass of the second catalyst layer.

**Fig.1**

**Fig.2**

**Fig.3**

Fig.4

Fig.5

**Fig.6**

**Fig.7A**

**Fig.7B**

**Fig.8A**

**Fig.8B**

**Fig.8C**

**Fig.9A**

**Fig.9B**

**Fig.10A**

**Fig.10B**

**Fig.10C**

**Fig.11**

**Fig.12**

## INTERNATIONAL SEARCH REPORT

| International application No. |
| --- |
| **PCT/JP2024/011727** |

| A. | CLASSIFICATION OF SUBJECT MATTER |
| --- | --- |

***B01J 35/57***(2024.01)i; ***B01D 53/94***(2006.01)i; ***B01J 23/63***(2006.01)i; ***F01N 3/035***(2006.01)i
FI:   B01J35/57 L; B01J35/57 E; B01D53/94 280; B01D53/94 245; B01D53/94 222; F01N3/035 A; B01J23/63 A ZAB

According to International Patent Classification (IPC) or to both national classification and IPC

| B. | FIELDS SEARCHED |
| --- | --- |

Minimum documentation searched (classification system followed by classification symbols)

    B01J35/57; B01D53/94; B01J23/63; F01N3/035

Documentation searched other than minimum documentation to the extent that such documents are included in the fields searched

    Published examined utility model applications of Japan 1922-1996
    Published unexamined utility model applications of Japan 1971-2024
    Registered utility model specifications of Japan 1996-2024
    Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021/181487 A1 (MITSUI MINING & SMELTING CO., LTD.) 16 September 2021 (2021-09-16)<br>    entire text, fig. 1, 2 | 1-8 |
| A | JP 2017-217646 A (CATALER CORP.) 14 December 2017 (2017-12-14)<br>    entire text, fig. 3 | 1-8 |
| A | WO 2006/057344 A1 (IBIDEN CO., LTD.) 01 June 2006 (2006-06-01)<br>    entire text | 1-8 |
| A | WO 2020/039650 A1 (MITSUI MINING & SMELTING CO., LTD.) 27 February 2020 (2020-02-27)<br>    entire text | 1-8 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 April 2024** | **14 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/011727**

| Patent document cited in search report | | | Publication date (day/month/year) | Patent family member(s) | | | Publication date (day/month/year) |
|---|---|---|---|---|---|---|---|
| WO | 2021/181487 | A1 | 16 September 2021 | US | 2022/0401939 | A1 | |
| | | | | entire text, fig. 1, 2 | | | |
| | | | | EP | 4119225 | A1 | |
| JP | 2017-217646 | A | 14 December 2017 | US | 2019/0299139 | A1 | |
| | | | | entire text, fig. 3 | | | |
| | | | | EP | 3454976 | A1 | |
| WO | 2006/057344 | A1 | 01 June 2006 | US | 2007/0044444 | A1 | |
| | | | | entire text | | | |
| | | | | EP | 1818098 | A1 | |
| WO | 2020/039650 | A1 | 27 February 2020 | US | 2021/0164377 | A1 | |
| | | | | entire text | | | |
| | | | | EP | 3842142 | A1 | |

Form PCT/ISA/210 (patent family annex) (July 2022)

**REFERENCES CITED IN THE DESCRIPTION**

**Patent documents cited in the description**

- JP 2017217646 A
- JP 2008272664 A

- WO 2008136232 A